# EUROPEAN PATENT APPLICATION

(11) **EP 4 733 984 A1**
(43) Date of publication of application: **29.04.2026**
(21) Application number: 24830737.3
(22) Date of filing: 25.06.2024
(51) Int. Cl.: G06K 17/00, G06V 30/146, G06V 30/14, G06Q 10/087

(54) **INFORMATION PROCESSING SYSTEM, METHOD, AND APPARATUS, AND ELECTRONIC DEVICE**

(30) Priority: 25.06.2023 CN 202310755326
(71) Applicant: Hangzhou Hikrobot Co., Ltd., Hangzhou, Zhejiang 310051 (CN)
(72) Inventor: CHEN, Qiyun, Hangzhou, Zhejiang 310051 (CN); XU, Zhijun, Hangzhou, Zhejiang 310051 (CN); SU, Quan, Hangzhou, Zhejiang 310051 (CN); LIANG, Shun, Hangzhou, Zhejiang 310051 (CN)
(74) Representative: Epping - Hermann - Fischer
(86) International application number: PCT/CN2024/101213
(87) International publication number: WO 2025/002096

(57) **Abstract**

The embodiments in the present application provides an information processing system, method, apparatus and an electronic device, which relate to the field of information processing. The information processing system includes a first image acquisition device and a management platform. The first image acquisition device acquires, when a first container without goods placed therein is detected in an warehouse-in area, a first image about the first container, and sends first image information of the first image to the management platform; the management platform receives the first image information sent by the first image acquisition device, and obtains a first container identifier of the first container based on the first image information; the first image acquisition device acquires a second image of a first container with goods placed therein, and sends second image information of the second image to the management platform; the management platform receives the second image information sent by the first image acquisition device, obtains a goods identifier of a piece of newly added goods in the first container based on the second image information, and binds the first container identifier with the goods identifier.

## Description

The present application claims the priority to a Chinese patent application No. 202310755326.4 filed with the China National Intellectual Property Administration (CNIPA) on June 25, 2023 and entitled " INFORMATION PROCESSING SYSTEM, METHOD, APPARATUS AND ELECTRONIC DEVICE", which is incorporated herein by reference in its entirety.

### Technical Field

The present application relates to the technical field of information processing, in particular to an information processing system, method, apparatus and an electronic device.

### Background

In the logistics industry, warehousing of goods transferred to a freight center is an important step in the process of goods circulation. In order to facilitate management of goods, it is necessary to establish a binding relationship between goods and a container used for transferring the goods.

In the related art, a staff scans two-dimensional codes of a container and of the goods placed on the container respectively by using a handheld device, to obtain a container identifier and goods identifiers, and binds the obtained container identifier with the goods identifiers.

However, in related art, the above binding process is performed manually. When there are a large quantity of goods, many situations such as repeated binding and omission of goods may occur, which leads to poor binding accuracy and low efficiency.

### Summary

The purpose of the embodiments in the present application is to provide an information processing system, method, apparatus and an electronic device for improving the efficiency of information processing. The specific technical solutions are as follows.

In a first aspect, an embodiment in the present application provides an information processing system, including a first image acquisition device and a management platform; wherein, the first image acquisition device is installed at a first preset position, and an acquisition area of the first image acquisition device includes a preset in-warehouse area;
the first image acquisition device is configured to acquire, when a first container without goods placed therein is detected in the warehouse-in area, a first image about the first container, and send first image information of the first image to the management platform, wherein, the first image information includes the first image or a first container identifier of the first container in the first image;
the management platform is configured to receive the first image information sent by the first image acquisition device, and obtain the first container identifier of the first container based on the first image information;
the first image acquisition device is further configured to acquire a second image of the first container with goods placed therein, and send second image information of the second image to the management platform, wherein, the second image information includes the second image or a goods identifier of a piece of newly added goods in the first container in the second image, compared with a previous image of the second image;
the management platform is further configured to receive the second image information sent by the first image acquisition device, obtain the goods identifier of the piece of newly added goods in the first container based on the second image information; and bind the first container identifier with the goods identifier.

Optionally, in a specific implementation, the first image acquisition device has an image identification function;
the first image acquisition device is specifically configured to perform identifier identification on the first image to obtain the first container identifier of the first container; and/or, identify the goods identifier of the piece of newly added goods in the first container in the second image based on image content of the second image and image content of the previous image of the second image.

Optionally, in a specific implementation,
the first image acquisition device is specifically configured to send the first image to the management platform, and send the second image to the management platform;
the management platform is specifically configured to perform identifier identification on the first image to obtain the first container identifier of the first container in the first image; identify the goods identifier of the piece of newly added goods in the first container in the second image based on image content of the second image and image content of the previous image of the second image.

Optionally, in a specific implementation,
the management platform is further configured to determine a verification result about the first container identifier when obtaining the first container identifier of the first container; output a palletizing instruction for instructing to place goods in the first container if the verification result represents that verification of the first container identifier is successful.

Optionally, in a specific implementation, the management platform is further configured to output a stop instruction for instructing to stop placing goods in the first container when detecting that an the identifier quantity of obtained goods identifiers reaches a preset container goods loading capacity, so that a palletizing robot or a staff stops placing goods in the first container.

Optionally, in a specific implementation, the management platform is further configured to determine a goods review result when detecting that the identifier quantity of the obtained goods identifiers reaches the container goods loading capacity; output first prompt information for prompting to enter goods identifiers when the goods review result represents that a quantity of goods placed in the first container is greater than the container goods loading capacity; receive goods identifiers sent by a target object in response to the first prompt information, and compare the received goods identifiers sent by the target object with the recorded goods identifiers to obtain a to-be-supplementarily-entered goods identifier to be bound; and bind the first container identifier with the to-be-supplementarily-entered goods identifier; wherein the goods identifiers sent by the target object are obtained by the target object scanning goods identifiers of the goods placed in the first container by using a preset scanning device;
and/or,
the management platform is further configured to output a second prompt information for prompting to verify a goods identifier when the goods review result represents that the quantity of goods placed in the first container is less than the container goods loading capacity; receive goods identifiers sent by the target object in response to the second prompt information, and compare the received goods identifiers sent by the target object with the recorded goods identifiers to obtain a redundant goods identifier to be unbound; and unbind the first container identifier from the redundant goods identifier.

Optionally, in a specific implementation, the first image acquisition device has an image identification function;
the management platform is specifically configured to send a goods review instruction to the first image acquisition device when detecting that the identifier quantity of the obtained goods identifiers reaches the container goods loading capacity;
the first image acquisition device is further configured to receive the goods review instruction and acquire a third image about the first container; perform object identification on the third image to obtain the quantity of goods placed in the first container; determine the goods review result based on the quantity of goods placed in the first container and the identifier quantity of the goods identifiers sent to the management platform, and send the goods review result to the management platform;
the management platform is specifically configured to receive the goods review result sent by the first image acquisition device.

Optionally, in a specific implementation,
the management platform is specifically configured to send an image acquisition instruction to the first image acquisition device when detecting that the identifier quantity of the obtained goods identifiers reaches the container goods loading capacity;
the first image acquisition device is further configured to receive the image acquisition instruction to acquire a third image about the first container, and send the third image to the management platform;
the management platform is specifically configured to receive the third image sent by the first image acquisition device; perform object identification on the third image to obtain the quantity of goods placed in the first container; determine the goods review result based on the quantity of goods placed in the first container and the identifier quantity of the obtained goods identifiers.

Optionally, in a specific implementation, the system further includes a transfer robot;
the management platform is further configured to instruct the transfer robot to transfer the first container to a preset storage area when the goods review result represents that the quantity of goods placed in the first container is the same as the container goods loading capacity;
   and/or,
the management platform is further configured to instruct the transfer robot to transfer the first container to a preset storage area after binding the first container identifier with the to-be-supplementarily-entered goods identifier;
   and/or,
the management platform is further configured to instruct the transfer robot to transfer the first container to a preset storage area after unbinding the first container identifier from the redundant goods identifier.

Optionally, in a specific implementation, the management platform is further configured to determine a theoretical moment at which a last piece of goods is loaded based on the container goods loading capacity and a preset goods loading speed; instruct a transfer robot to move to the warehouse-in area when detecting that a current moment is before the theoretical moment and a time interval between the current moment and the theoretical moment is a preset duration; wherein, the preset duration is determined based on a moving speed of the transfer robot.

Optionally, in a specific implementation, the system further includes a second image acquisition device; wherein, the second image acquisition device is installed at a second preset position, an acquisition area of the second image acquisition device includes a preset warehouse-out area;
the second image acquisition device is configured to acquire, when a second container without goods placed therein is detected in the warehouse-out area, a fourth image about the second container, and send third image information of the fourth image to the management platform, wherein, the third image information includes the fourth image or a second container identifier of the second container in the fourth image;
the management platform is further configured to receive the third image information sent by the second image acquisition device, and obtain the second container identifier of the second container based on the third image information; and unbind the second container identifier from a goods identifier bound with the second container identifier.

Optionally, in a specific implementation, the second image acquisition device has an image identification function;
the second image acquisition device is further configured to perform identifier identification on the fourth image to obtain the second container identifier of the second container.

Optionally, in a specific implementation,
the second image acquisition device is specifically configured to send the fourth image to the management platform;
the management platform is further configured to perform identifier identification on the fourth image to obtain the second container identifier of the second container.

In a second aspect, an embodiment of the present application provides an information processing method, which is applied to a management platform in an information processing system, wherein the system further includes a first image acquisition device; wherein, the first image acquisition device is installed at a first preset position, and an acquisition area of the first image acquisition device includes a preset warehouse-in area; the method includes:
receiving first image information of a first image sent by the first image acquisition device, and obtaining a first container identifier of a first container based on the first image information; wherein, the first image is obtained by the first image acquisition device acquiring, when the first container without goods placed therein is detected in the warehouse-in area, an image of the first container, and the first image information includes the first image or the first container identifier of the first container in the first image;
receiving second image information of a second image sent by the first image acquisition device, and obtaining a goods identifier of a piece of newly added goods in the first container based on the second image information, wherein, the second image is obtained by the first image acquisition device acquiring an image of the first container with goods placed therein, and the second image information includes the second image or the goods identifier of the piece of newly added goods in the first container in the second image compared with a previous image of the second image;
binding the first container identifier with the goods identifier.

Optionally, in a specific implementation, obtaining the goods identifier of the piece of newly added goods in the first container based on the second image information, includes:
performing identifier identification on the first image to obtain the first container identifier of the first container in the first image; identifying the goods identifier of the piece of newly added goods in the first container in the second image based on image content of the second image and image content of the previous image of the second image.

Optionally, in a specific implementation, the method further includes:
determining a verification result about the first container identifier when obtaining the first container identifier of the first container; if the verification result represents that verification of the first container identifier is successful, outputting a palletizing instruction for instructing to place goods in the first container.

Optionally, in a specific implementation, the system further includes a palletizing robot; the method further includes:
outputting a stop instruction for instructing to stop placing goods in the first container when detecting that an identifier quantity of obtained goods identifiers reaches a preset container goods loading capacity, so that the palletizing robot or a staff stops placing goods in the first container.

Optionally, in a specific implementation, the method further includes:
determining a goods review result when detecting that the identifier quantity of the obtained goods identifiers reaches the container goods loading capacity;
outputting first prompt information for prompting to enter goods identifiers when the goods review result represents that the quantity of goods placed in the first container is greater than the container goods loading capacity;
receiving goods identifiers sent by a target object in response to the first prompt information, and comparing the received goods identifiers sent by the target object with the recorded goods identifiers to obtain a to-be-supplementarily-entered goods identifier to be bound; and binding the first container identifier with the to-be-supplementarily-entered goods identifier; wherein, the goods identifiers sent by the target object are obtained by the target object scanning goods identifiers of the goods placed in the first container by using a preset scanning device;
outputting second prompt information for prompting to verify a goods identifier when the goods review result represents that the quantity of goods placed in the first container is less than the container goods loading capacity; receiving goods identifiers sent by the target object in response to the second prompt information, and comparing the received goods identifiers sent by the target object with the recorded goods identifiers to obtain a redundant goods identifier to be unbound; and unbinding the first container identifier from the redundant goods identifier.

Optionally, in a specific implementation, the first image acquisition device has an image identification function; determining the goods review result, includes:
sending a goods review instruction to the first image acquisition device when detecting that the identifier quantity of the obtained goods identifiers reaches the container goods loading capacity, so that the first image acquisition device receives the goods review instruction and acquires a third image about the first container;
receiving the goods review result sent by the first image acquisition device, wherein, the goods review result is determined based on the quantity of goods placed in the first container and the identifier quantity of the goods identifiers sent to the management platform, wherein the quantity of goods placed in the first container is obtained by the first image acquisition device performing object identification on the third image.

Optionally, in a specific implementation, the first image acquisition device has an image identification function; determining the goods review result, includes:
sending an image acquisition instruction to the first image acquisition device when detecting that the identifier quantity of the obtained goods identifiers reaches the container goods loading capacity, so that the first image acquisition device receives the image acquisition instruction, to acquire a third image about the first container, and sends the third image to the management platform;
receiving the third image sent by the first image acquisition device;
performing object identification on the third image to obtain the quantity of goods placed in the first container; and determining the goods review result based on the quantity of the goods placed in the first container and the identifier quantity of the obtained goods identifiers.

Optionally, in a specific implementation, the system further includes a transfer robot; the method further includes:
instructing the transfer robot to transfer the first container to a preset storage area when the goods review result represents that the quantity of the goods placed in the first container is the same as the container goods loading capacity;
   and/or,
instructing the transfer robot to transfer the first container to a preset storage area after binding the first container identifier with the to-be-supplementarily-entered goods identifier;
   and/or,
instructing the transfer robot to transfer the first container to a preset storage area after unbinding the first container identifier from the redundant goods identifier.

Optionally, in a specific implementation, the method further includes:
determining a theoretical moment at which the last piece of goods is loaded based on the container goods loading capacity and a preset goods loading speed;
instructing the transfer robot to move to the warehouse-in area when detecting that a current moment is before the theoretical moment and a time interval between the current moment and the theoretical moment is a preset duration; wherein, the preset duration is determined based on a moving speed of the transfer robot.
Optionally, in a specific implementation, the system further includes a second image acquisition device; wherein, the second image acquisition device is installed at a second preset position, and an acquisition area of the second image acquisition device includes a preset warehouse-out area;
the method further includes:
   receiving third image information sent by the second image acquisition device, and obtaining a second container identifier of a second container based on the third image information; wherein, the third image information is image information of a fourth image about the second container acquired by the second image acquisition device when the second container without goods placed therein is detected in the warehouse-out area, the third image information includes the fourth image or the second container identifier of the second container in the fourth image;
   unbinding the second container identifier from a goods identifier bound with the second container identifier.

Optionally, in a specific implementation, obtaining the second container identifier of the second container, includes:
performing identifier identification on the fourth image to obtain the second container identifier of the second container.

In a third aspect, an embodiment of the present application provides an information processing method, which is applied to a first image acquisition device in an information processing system, wherein the system further includes a management platform; wherein, the first image acquisition device is installed at a first preset position, and an acquisition area of the first image acquisition device includes a preset warehouse-in area; the method includes:
acquiring, when a first container without goods placed therein is detected in an warehouse-in area, a first image about the first container , and sending first image information of the first image to the management platform, so that the management platform receives the first image information and obtains a first container identifier of the first container based on the first image information, wherein, the first image information includes the first image or the first container identifier of the first container in the first image;
acquiring a second image of the first container with goods placed therein, and sending second image information of the second image to the management platform, so that the management platform receives the second image information sent by the first image acquisition device, obtains a goods identifier of a piece of newly added goods in the first container based on the second image information, and binds the first container identifier with the goods identifier, wherein, the second image information includes the second image or the goods identifier of the piece of newly added goods in the first container in the second image compared with a previous image of the second image.

Optionally, in a specific implementation, the first image acquisition device has an image identification function, the method further includes:
performing identifier identification on the first image to obtain the first container identifier of the first container; and/or, identifying the goods identifier of the piece of newly added goods in the first container in the second image based on image content of the second image and image content of the previous image of the second image.

Optionally, in a specific implementation, the first image acquisition device has an image identification function; the method further includes:
receiving a goods review instruction issued by the management platform when the identifier quantity of obtained goods identifiers is detected to reach the container goods loading capacity, and acquiring a third image about the first container; performing object identification on the third image to obtain the quantity of goods placed in the first container; determining a goods review result based on the quantity of goods placed in the first container and the identifier quantity of goods identifiers sent to the management platform, and sending the goods review result to the management platform, so that the management platform receives the goods review result sent by the first image acquisition device.

Optionally, in a specific implementation, the method further includes:
receiving an image acquisition instruction issued by the management platform when the identifier quantity of obtained goods identifiers is detected to reach the container goods loading capacity, acquiring a third image about the first container, and sending the third image to the management platform, so that the management platform receives the third image sent by the first image acquisition device, performs object identification on the third image to obtain the quantity of goods placed in the first container, and determines the goods review result based on the quantity of goods placed in the first container and the identifier quantity of the obtained goods identifiers.

In a fourth aspect, an embodiment of the present application provides an information processing apparatus, which is applied to a management platform in an information processing system, wherein the system further includes a first image acquisition device; wherein, the first image acquisition device is installed at a first preset position, and an acquisition area of the first image acquisition device includes a preset warehouse-in area; the apparatus includes:
a container identifier receiving module, configured to receive first image information of a first image sent by the first image acquisition device, and obtain a first container identifier of a first container based on the first image information, wherein, the first image is obtained by the first image acquisition device acquiring, when the first container without goods placed therein is detected in the warehouse-in area, an image of the first container, and the first image information includes the first image or the first container identifier of the first container in the first image;
a goods identifier receiving module, configured to receive second image information of a second image sent by the first image acquisition device, and obtain a goods identifier of a piece of newly added goods in the first container based on the second image information, wherein, the second image is obtained by the first image acquisition device acquiring an image of the first container with goods placed therein, and the second image information includes the second image or the goods identifier of the piece of newly added goods in the first container in the second image compared with a previous image of the second image;
a binding module, configured to bind the first container identifier with the goods identifier.

Optionally, in a specific implementation, the goods identifier receiving module includes:
a first identification unit, configured to perform identifier identification on the first image to obtain the first container identifier of the first container in the first image; identify the goods identifier of the piece of newly added goods in the first container in the second image based on image content of the second image and image content of the previous image of the second image.

Optionally, in a specific implementation, the apparatus further includes:
a verification result acquisition unit, configured to determine a verification result about the first container identifier when the first container identifier of the first container is obtained; output a palletizing instruction for instructing to place goods in the first container if the verification result represents that verification of the first container identifier is successful.

Optionally, in a specific implementation, the apparatus further includes:
a first output unit, configured to output a stop instruction for instructing to stop placing goods in the first container when the identifier quantity of the obtained goods identifiers is detected to reach a preset container goods loading capacity, so that a palletizing robot or a staff stops placing goods in the first container.

Optionally, in a specific implementation, the apparatus further includes:
a result acquisition unit, configured to determine a goods review result when the identifier quantity of the obtained goods identifiers is detected to reach the container goods loading capacity; output first prompt information for prompting to entering goods identifiers when the goods review result represents that the quantity of goods placed in the first container is greater than the container goods loading capacity, receive goods identifiers sent by a target object in response to the first prompt information, compare the received goods identifiers sent by the target object with the recorded goods identifiers to obtain a to-be-supplementarily-entered goods identifier to be bound, and bind the first container identifier with the to-be-supplementarily-entered goods identifier, wherein the goods identifiers sent by the target object are obtained by the target object scanning goods identifiers of the goods placed in the first container by using a preset scanning device; output a second prompt information for prompting to verify a goods identifier when the goods review result represents that the quantity of goods placed in the first container is less than the container goods loading capacity, receive goods identifiers sent by the target object in response to the second prompt information, and compare the received goods identifiers sent by the target object with the recorded goods identifiers to obtain a redundant goods identifier to be unbound, and unbind the first container identifier from the redundant goods identifier.

Optionally, in a specific implementation, the first image acquisition device has an image identification function; the result acquisition unit is specifically configured to:
send a goods review instruction to the first image acquisition device when the identifier quantity of the obtained goods identifiers is detected to reach the container goods loading capacity, so that the first image acquisition device receives the goods review instruction and acquire a third image about the first container; receive the goods review result sent by the first image acquisition device, wherein, the goods review result is determined based on the quantity of goods placed in the first container and the identifier quantity of the goods identifiers sent to the management platform, and the quantity of goods placed in the first container is obtained by the first image acquisition device performing object identification on the third image.

Optionally, in a specific implementation, the first image acquisition device has an image identification function; the result acquisition unit is specifically configured to:
send an image acquisition instruction to the first image acquisition device when the identifier quantity of the obtained goods identifiers is detected to reach the container goods loading capacity, so that the first image acquisition device receives the image acquisition instruction to acquire a third image about the first container, and sends the third image to the management platform; receive the third image sent by the first image acquisition device; perform object identification on the third image to obtain the quantity of goods placed in the first container; and determine the goods review result based on the quantity of goods placed in the first container and the identifier quantity of the obtained goods identifiers.

Optionally, in a specific implementation, the system further includes a transfer robot; the apparatus further includes:
an instructing unit, configured to instruct the transfer robot to transfer the first container to the preset storage area when the goods review result represents that the quantity of goods placed in the first container is the same as the container goods loading capacity; and/or, instruct the transfer robot to transfer the first container to the preset storage area after the first container identifier is bound with the to-be-supplementarily-entered goods identifier; and/or, instruct the transfer robot to transfer the first container to the preset storage area after the first container identifier is unbound from the redundant goods identifier.

Optionally, in a specific implementation, the apparatus further includes:
a moment determining unit, configured to determine a theoretical moment at which the last piece of goods is loaded based on the container goods loading capacity and a preset goods loading speed; instruct the transfer robot to move to the warehouse-in area when a current moment is detected to be before the theoretical moment and a time interval between the current moment and the theoretical moment is a preset duration; wherein, the preset duration is determined based on a moving speed of the transfer robot.

Optionally, in a specific implementation, the system further includes a second image acquisition device; wherein, the second image acquisition device is installed at a second preset position, and an acquisition area of the second image acquisition device includes a preset warehouse-out area;
the apparatus further includes:
an information receiving unit, configured to receive third image information sent by the second image acquisition device, and obtain a second container identifier of the second container based on the third image information; wherein, the third image information is image information of a fourth image about the second container acquired by the second image acquisition device when the second container without goods placed therein is detected in the warehouse-out area, and the third image information includes the fourth image or a second container identifier of the second container in the fourth image; unbind the second container identifier from a goods identifier bound with the second container identifier.

Optionally, in a specific implementation, the information receiving unit is specifically configured to:
perform identifier identification on the fourth image to obtain the second container identifier of the second container.

In a fifth aspect, an embodiment of the present application provides an information processing apparatus, which is applied to a first image acquisition device in an information processing system, wherein the system further includes a management platform; wherein the first image acquisition device is installed at a first preset position, and an acquisition area of the first image acquisition device includes a preset warehouse-in area; the apparatus includes:
a container identifier identifying module, configured to acquire, when the first container without goods placed therein is detected in the warehouse-in area, a first image about a first container, and send first image information of the first image to the management platform, so that the management platform receives the first image information, and obtains a first container identifier of the first container based on the first image information, wherein, the first image information includes the first image or the first container identifier of the first container in the first image;
a goods identifier identifying module, configured to acquire a second image of the first container with goods placed therein, and send second image information of the second image to the management platform, so that the management platform receives the second image information, obtains a goods identifier of a piece of newly added goods in the first container based on the second image information, and binds the first container identifier with the goods identifier, wherein, the second image information includes the second image or the goods identifier of the piece of newly added goods in the first container in the second image compared with a previous image of the second image.

Optionally, in a specific implementation, the first image acquisition device has an image identification function; the apparatus further includes:
a second identification unit, configured to perform identifier identification on the first image to obtain the first container identifier of the first container; and/or, identify the goods identifier of the piece of newly added goods in the first container in the second image based on image content of the second image and image content of the previous image of the second image.

Optionally, in a specific implementation, the first image acquisition device has an image identification function; the apparatus further includes:
a first instruction receiving unit, configured to receive a goods review instruction issued by the management platform when the identifier quantity of the obtained goods identifiers is detected to reach the container goods loading capacity, and acquire a third image about the first container; perform object identification on the third image to obtain the quantity of goods placed in the first container; determine the goods review result based on the quantity of goods placed in the first container and the identifier quantity of goods identifiers sent to the management platform, and send the goods review result to the management platform, so that the management platform receives the goods review result sent by the first image acquisition device.

Optionally, in a specific implementation, the apparatus further includes:
a second instruction receiving unit, configured to receive an image acquisition instruction issued by the management platform when the identifier quantity of the obtained goods identifiers is detected to reach the container goods loading capacity, acquire a third image about the first container, and send the third image to the management platform, so that the management platform receives the third image sent by the first image acquisition device; performs object identification on the third image to obtain the quantity of goods placed in the first container; and determines the goods review result based on the quantity of goods placed in the first container and the identifier quantity of the obtained goods identifiers.

In a sixth aspect, an embodiment of the present application provides an electronic device, including:
a memory, configured to store a computer program;
a processor, configured to carry out the steps of any of the above method embodiments when executing the program stored on the memory.

In a seventh aspect, an embodiment of the present application provides a computer-readable storage medium having a computer program stored therein, wherein the computer program, when executed by a processor, carries out the steps of any of the above method embodiments.

In an eighth aspect, an embodiment of the present application further provides a computer program product containing instructions, which when running on a computer, causes the computer to carry out the steps of any of the above method embodiments.

In a ninth aspect, an embodiment of the present application further provides a computer program containing instructions, which when running on a computer, causes the computer to carry out the steps of any of the above method embodiments.

Beneficial effects of the embodiments of the present application are as follows:
It can be seen from the above that, by applying the solutions provided by the embodiments of the present application, the information processing system can include the first image acquisition device and the management platform; wherein the first image acquisition device is installed at the first preset position, and the acquisition area of the first image acquisition device includes the preset warehouse-in area.

During information processing, the first image acquisition device can acquire, when the first container without goods placed therein is detected in the warehouse-in area, the first image about the first container , and send the first image information of the first image to the management platform, wherein, the first image information includes the first image or the first container identifier of the first container in the first image. The management platform can receive the first image information sent by the first image acquisition device, and obtain the first container identifier of the first container based on the first image information. Furthermore, the first image acquisition device further can acquire the second image of the first container with goods placed therein, and send the second image information of the second image to the management platform, wherein, the second image information includes the second image or a goods identifier of a piece of newly added goods in the first container in the second image compared with a previous image of the second image. In this way, the management platform further can receive the second image information sent by the first image acquisition device, and obtain the goods identifier of the piece of newly added goods in the first container based on the second image information; bind the first container identifier with the goods identifier.

Based on this, by applying the solutions provided by the embodiments of the present application, both the container identifier and the goods identifier are obtained by identifying the images acquired by the first image acquisition device. Thus, compared with the identification by manual scanning, the identification efficiency is higher; during placing goods, a piece of newly added goods in the container can be determined by comparing adjacent images, and then the goods identifier of the piece of newly added goods in the container can be identified, enabling to effectively avoid the omission of goods and improve the accuracy of identifier identification; in addition, the binding of the container identifier with the goods identifier is realized through cooperation of the management platform and the image acquisition device, which can improve the binding efficiency compared with the manual binding method.

Of course, it is not necessary for any product or method implementing the present application to achieve all the advantages described above simultaneously.

### Brief Description of the Drawings

The accompanying drawings described here are used to provide a further understanding of the present application and constitute a part of the same. The illustrative embodiments of the present application and their descriptions are used to explain the present application and do not constitute an improper limitation of the present application.
Fig. 1 is a schematic structure diagram of an information processing system provided by an embodiment of the present application;
Fig. 2 is a signaling interaction diagram of an information processing system provided by an embodiment of the present application;
Fig. 3 is a schematic diagram of an application scenario of an information processing system provided by an embodiment of the present application;
Fig. 4(a) is a schematic diagram of a first image acquired by a first image acquisition device provided by an embodiment of the present application;
Fig. 4(b) is a schematic diagram of a second image acquired by a first image acquisition device provided by an embodiment of the present application;
Fig. 4(c) is a another schematic diagram of a second image acquired by a first image acquisition device provided by an embodiment of the present application;
Fig. 5 is a schematic flow diagram of a specific example of an information processing system provided by an embodiment of the present application;
Fig. 6 is a schematic flow diagram of an information processing method applied to a management platform in an information processing system provided by an embodiment of the present application;
Fig. 7 is a schematic flow diagram of an information processing method applied to a first image acquisition device in an information processing system provided by an embodiment of the present application;
Fig. 8 is a schematic structure diagram of an information processing apparatus applied to a management platform of an information processing system provided by an embodiment of the present application;
Fig. 9 is a schematic structure diagram of an information processing apparatus applied to a first image acquisition device in an information processing system provided by an embodiment of the present application;
Fig. 10 is a schematic structure diagram of an electronic device provided by an embodiment of the present application.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

In the related art, a staff scans two-dimensional codes of a container and of goods placed on the container respectively by using a handheld device, to obtain a container identifier and goods identifiers, and binds the acquired container identifier with the goods identifiers. However, in related art, the above binding process is performed manually. When there are a large quantity of goods, many situations such as repeated binding and omission of goods may occur, which leads to poor binding accuracy and low efficiency.

In order to solve the above technical problem, an embodiment of the present application provides an information processing system.

The information processing system can be applied in various application scenarios in which a binding relationship between a container and ab object transferred by the container needs to be established. For example, in a factory, when the container is used to transfer goods, the binding relationship between the goods and the container can be recorded. For another example, at the check-in office, when a passenger's luggage is carried by trolley, a binding relationship between each piece of luggage and the trolley is established, etc.

The information processing system provided by the embodiment of the present application may include a first image acquisition device and a management platform.

The above image acquisition device can be various kinds of image acquisition devices that can acquire images, such as an intelligent video camera, an intelligent camera, etc., and the above image acquisition device can be a 2D (2-Dimension) image acquisition device, or a 3D (3-Dimension) image acquisition device. The above management platform is various kinds of electronic devices that can communicate with the image acquisition device, such as a mobile phone, a computer, a server, etc.; moreover, the management platform can be a single electronic device or a cluster composed of multiple electronic devices.

Based on this, the embodiment of the present application does not specifically limit the application scenario and execution entity of the method.

In the information processing system provided by the embodiment of the present application, the first image acquisition device is installed at a first preset position, and an acquisition area of the first image acquisition device includes a preset warehouse-in area;
the first image acquisition device is configured to acquire, when a first container without goods placed therein is detected in the warehouse-in area, a first image about the first container, and send first image information of the first image to the management platform, wherein, the first image information includes the first image or a first container identifier of the first container in the first image;
the management platform is configured to receive the first image information sent by the first image acquisition device, and obtain the first container identifier of the first container based on the first image information;
the first image acquisition device is further configured to acquire a second image of the first container with goods placed therein, and send second image information of the second image to the management platform, wherein, the second image information includes the second image or a goods identifier of a piece of newly added goods in the first container in the second image compared with a previous image of the second image;
the management platform is further configured to receive the second image information sent by the first image acquisition device, and obtain the goods identifier of the piece of newly added goods in the first container based on the second image information; bind the first container identifier with the goods identifier.

It can be seen from the above that, by applying the solution provided by the embodiment of the present application, the information processing system may include the first image acquisition device and the management platform; wherein the first image acquisition device is installed at the first preset position, and the acquisition area of the first image acquisition device includes the preset warehouse-in area.

During information processing, the first image acquisition device can acquire, when a first container without goods placed therein is detected in the warehouse-in area, the first image about the first container, and send the first image information of the first image to the management platform, wherein, the first image information includes the first image or the first container identifier of the first container in the first image. The management platform can receive the first image information sent by the first image acquisition device, and obtain the first container identifier of the first container based on the first image information. Furthermore, the first image acquisition device further can acquire the second image of the first container with goods placed therein, and send the second image information of the second image to the management platform, wherein, the second image information includes the second image or a goods identifier of a piece of newly added goods in the first container in the second image compared with a previous image of the second image. In this way, the management platform can receive the second image information sent by the first image acquisition device, and obtain the goods identifier of the piece of newly added goods in the first container based on the second image information; bind the first container identifier with the goods identifier.

Based on this, by applying the solution provided by the embodiment of the present application, both the container identifier and goods identifier are obtained by identifying the images acquired by the first image acquisition device. Thus, compared with the identification by manual scanning, the identification efficiency is higher; during placing goods, a piece of newly added goods in the container can be determined by comparing adjacent images, and then the goods identifier of the piece of newly added goods in the container can be identified, enabling to effectively avoid the omission of goods and improve the accuracy of identifier identification; in addition, the binding of the container identifier with the goods identifier is realized through cooperation of the management platform and the image acquisition device, which can improve the binding efficiency compared with the manual binding method.

In the following, the information processing system provided by the embodiment of the present application is described in detail combined with the drawings.

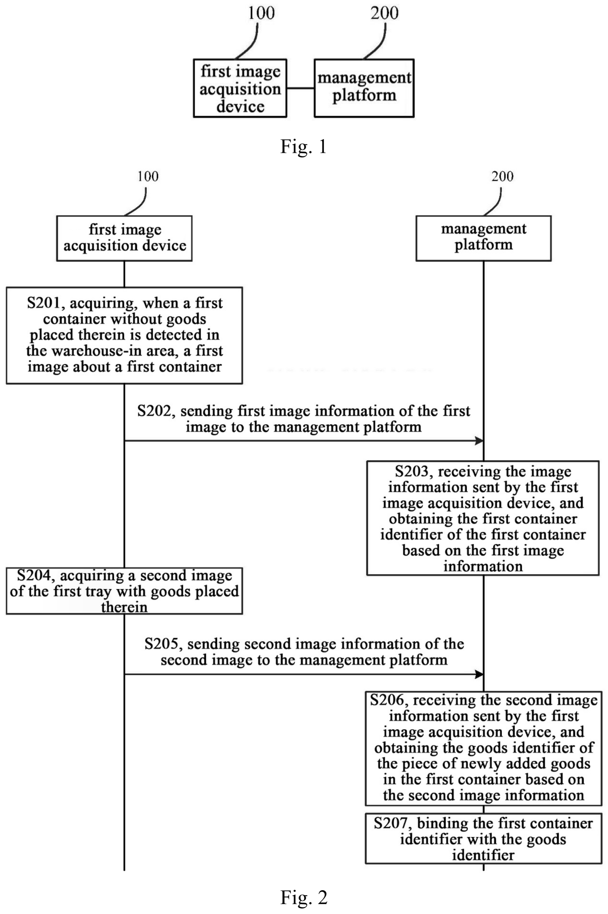

Fig. 1 is a schematic structure diagram of an information processing system provided by an embodiment of the present application. As shown in Fig. 1, the system can include a first image acquisition device 100 and a management platform 200, wherein, the first image acquisition device 100 is installed at a first preset position, and an acquisition area of the first image acquisition device 100 includes a preset warehouse-in area;
the first image acquisition device 100 is configured to acquire, when a first container without goods placed therein is detected in the warehouse-in area, a first image about a first container, and send first image information of the first image to the management platform 200, wherein, the first image information includes the first image or a first container identifier of the first container in the first image;
the management platform 200 is configured to receive the first image information sent by the first image acquisition device, and obtain the first container identifier of the first container based on the first image information;
the first image acquisition device 100 is further configured to acquire a second image of the first container with goods placed therein, and send second image information of the second image to the management platform 200, wherein, the second image information includes the second image or a goods identifier of a piece of newly added goods in the first container in the second image compared with a previous image of the second image;
the management platform 200 is further configured to receive the second image information sent by the first image acquisition device 100, and obtain the goods identifier of the piece of newly added goods in the first container based on the second image information; bind the first container identifier with the goods identifier.

In the following, combined with a signaling interaction process of the first image acquisition device 100 and the management platform 200 in the above information processing system, the information processing system provided by the embodiment of the application shown in Fig. 1 is described in detail.

Fig. 2 is a schematic signaling interaction diagram of the information processing system provided by an embodiment of the present application. As shown in Fig. 2, the interaction process between the first image acquisition device 100 and the management platform 200 in the above information processing system can include the following steps S201-S207.

S201: the first image acquisition device 100 acquires, when a first container without goods placed therein is detected in the warehouse-in area, a first image about a first container.

S202: the first image acquisition device 100 sends first image information of the first image to the management platform 200.

Wherein, the first image information includes the first image or a first container identifier of the first container in the first image.

S203: the management platform 200 receives the first image information sent by the first image acquisition device, and obtains the first container identifier of the first container based on the first image information.

Generally, goods transferred from various places will be firstly placed in a preset designated area for pre-processing of warehouse-in such as inventorying, disinfection and the like. For example, each packing box is placed in a goods sorting area of the logistics center for inventorying.

After completion of the pre-processing of warehouse-in, goods are placed on a conveyor belt and transferred to the warehouse-in area by the conveyor belt, or goods are transferred to the warehouse-in area by an Automated Guided Vehicle (AGV), where the goods are palletized by using individual containers in the warehouse-in area. Thus, for each container, after the palletizing of goods is completed, the container and goods placed in the container are transferred to a storage area for storage. After that, in transferring the goods out of the warehouse, the container and the goods placed in the container are transferred to an warehouse-out area. In this way, the staff or an unloading robot in the warehouse-out area can unload the goods in the container, empty the container, and deliver the goods to different cities.

The container can include a tray, a bin, a shelf, etc., which is not specifically limited here. Accordingly, the above goods can be set according to the type of container. For example, when the container is a shelf, the goods can be bins.

The process of placing the goods placed on a conveyor belt or AGV into a container can be called goods palletizing.

In addition, the process of placing goods in a container and transferring the container to the storage area together with the container can be called goods warehouse-in; and the process of transferring goods and the container with the goods placed therein from the storage area to the warehouse-out area can be called goods warehouse-out.

Take the logistics industry as an example, the logistics center can receive goods from various parties, and classify the received goods, and then the goods are circulated to individual destinations. Generally, after receiving the goods from various parties, the logistics center can place the received goods in a goods sorting area, and perform a sorting operation (such as clean, classify, and the like) on the goods in the goods sorting area. After that, the goods that has been sorted can be transferred by a conveyor belt to an warehouse-in area, and the goods can be palletized by using individual containers in the warehouse-in area. Then, for each container, the container and the goods placed in the container can be transferred to the storage area for storage. After that, the container can be transferred to the warehouse-out area when the goods need to be transferred out of the warehouse. In this way, the goods in the container can be loaded in the warehouse-out area, and then transferred to individual destinations, and the container will be emptied.

Individual designated positions for palletizing goods can be determined in advance in the warehouse-in area. In this way, individual containers without goods placed therein can be placed in idle designated positions respectively after being scheduled to the warehouse-in area, and goods can be loaded at the designated positions.

In addition, in order to trace the origin of the circulation process of goods, the binding relationship between the container and the goods placed in the container can be established during goods palletizing.

Furthermore, in order to establish the binding relationship between the goods and the container, the first image acquisition device 100 can be installed at the first preset location, so that the acquisition area of the first image acquisition device 100 can include at least one designated position in the warehouse-in area.

The first preset position can be set according to actual needs, for example, it can be a top of the warehouse-in area, such as the ceiling, etc., which is reasonable and is not specifically limited in the embodiment of the present application.

Optionally, considering that the acquisition range of each first image acquisition device 100 is limited, the installation quantity and installation location of first image acquisition devices 100 in the system can be determined according to a size of the warehouse-in area, a device parameter of the first image acquisition device 100 and other information, so that the acquisition range of the installed first image acquisition devices 100 can cover each designated position for goods palletizing in the warehouse-in area. That is to say, multiple first image acquisition devices 100 can be installed, and the acquisition range of each first image acquisition device 100 covers some of the designated positions in the warehouse-in area. In this way, the acquisition range of the multiple image acquisition devices 100 shall cover at least all designated positions for goods palletizing in the warehouse-in area. Of course, it is also possible to install one first image acquisition device 100, and the acquisition range of the first image acquisition device 100 can cover the all designated positions in the warehouse-in area.

In addition, the first image acquisition device 100 can perform image acquisition on the above warehouse-in area according to a preset acquisition interval.

Optionally, when the first image acquisition device 100 has an image identification function, after acquiring an image about the warehouse-in area, the first image acquisition device 100 can identify the image acquired by itself to identify an object in the acquired image, or can determine the increase or decrease of objects included in each image by comparing the acquired multiple images.

Moreover, the above preset acquisition interval can be set according to the actual needs. For example, the preset acquisition interval can be less than a preset palletizing speed. For example, when the preset palletizing speed is 3 seconds, the preset acquisition interval can be 1 second; when the preset palletizing speed is 1 second, the preset acquisition interval can be 0.5 seconds, etc., which are all reasonable and not specifically limited in the embodiment of the application.

Optionally, if goods are stacked in the container in the goods palletizing, and the first image acquisition device 100 is installed at the top of the designated position, then the installed first image acquisition device 100 can be a 3D image acquisition device in order to facilitate determining the quantity of goods placed in each container according to the top view acquired by the first image acquisition device 100. In this way, when the first image acquisition device 100 has the image identification function, the first image acquisition device 100 or the management platform 200 can determine the quantity of goods placed in the first container according to the depth information of the goods in the first container in the acquired image and the pre-stored size information of the goods to be palletized this time.

In order to palletize goods by using each container, the first container without goods placed therein can be scheduled to the warehouse-in e area. That is to say, when there is a first container in the warehouse-in area and no goods is placed in the first container, it can be considered that the first container will be used for goods palletizing. In order to establish the binding relationship between the first container and the goods placed in the first container, the first container identifier of the first container can be obtained firstly.

Based on this, the above first image acquisition device 100 can acquire, when a first container without goods placed therein is detected in the warehouse-in area, the first image of the first container.

Optionally, after scheduling the first container without goods placed therein to the designated position in the warehouse-in area, the user can trigger a control for controlling the first image acquisition device 100, to issue an image acquisition signal to the first image acquisition device 100 that acquires the image of the designated position where the first container reaches. When the first image acquisition device 100 detects the image acquisition signal, the first image acquisition device 100 can acquire the first image of the first container without goods placed therein according to the preset acquisition interval.

Optionally, after scheduling the first container without goods placed therein to the designated position in the warehouse-in area, the management platform 200 can issue an image acquisition instruction to the first image acquisition device 100 that acquires the image of the designated position where the first container reaches. When the first image acquisition device 100 detects the image acquisition instruction, the first image acquisition device 100 can acquire the first image of the first container without goods placed therein according to the preset acquisition interval.

Optionally, the first image acquisition device 100 has an image identification function. When a newly added first container is detected at the designated position in the current acquired image compared with the previous image, the first image acquisition device 100 acquires the first image of the newly added first container.

After that, the above first image acquisition device 100 can determine the first image information of the acquired first image and send the first image information of the first image to the management platform 200. The first image information can include the first image or the first container identifier of the first container in the first image. In this way, the management platform 200 can receive the above first image information and obtain the first container identifier of the first container in the first image based on the received first image information.

Optionally, when the above first image information includes the first image, the first image acquisition device 100 can send the first image of the first container to the management platform 200 after acquiring the first image. The management platform 200 can receive the first image and perform identifier identification on the first image to obtain the first container identifier of the first container.

Optionally, when the first image acquisition device has an image identification function, the first image information may include the first container identifier of the first container in the first image. After acquiring the first image of the first container, the first image acquisition device 100 can perform identifier identification on the first image to obtain the first container identifier of the first container, and send the identified first container identifier of the first container to the management platform 200. The management platform 200 can receive the first container identifier of the first container.

The above first container identifier is used to uniquely determine the first container, which can be at least one of a container symbol, a container number, a container two-dimensional code, and other information. In other words, when the at least one of the container symbol, the container number, the container two-dimensional code and other information of the first container is identified, the identified information can be used as the first container identifier of the first container. In addition, in order to better identify the first container, it can also identify the shape, color and other container information of the first container, to obtain container information and the first container identifier of the first container, so that the management platform 200 can identify the first container by using the container information and the first container identifier of the first container.

The above container symbol can be set according to actual needs, for example, can be #, @, &, etc., which are all reasonable and are not specifically limited in the embodiments of the present application. Furthermore, each container has a different symbol to uniquely identify the container.

Accordingly, each container has a different container number and container two-dimensional code, to uniquely identify the container.

Optionally, an initial model can be trained in advance based on individual sample containers and container identifiers of the individual sample containers such as the container symbol, the container number, the container two-dimensional code and the like. When the above initial model meets a preset condition, the training is stopped and a first container identifier-identifying model is obtained, and an identification module including the first container identifier-identifying model is set in the first image acquisition device 100 and/or management platform 200. In this way, when obtaining the first image of the first container without goods placed therein, the first image acquisition device 100 and/or management platform 200 can input the first image into the first container identifier-identifying model and obtain the at least one of the container symbol, the container number, the two-dimensional code and the like of the first container identified by the first container identifier-identifying model, as the first container identifier of the first container.

Optionally, the information processing system includes a palletizing robot. The management platform 200, after obtaining the first container identifier of the first container, can issue a goods palletizing instruction for instructing to place goods in the first container, so that the staff or the palletizing robot can place goods in the first container based on the goods palletizing instruction. The palletizing robot can be a variety of robots with a manipulator, and the palletizing robot is located in a palletizing position corresponding to the designated position where the container is placed, and palletizes goods at the palletizing position.

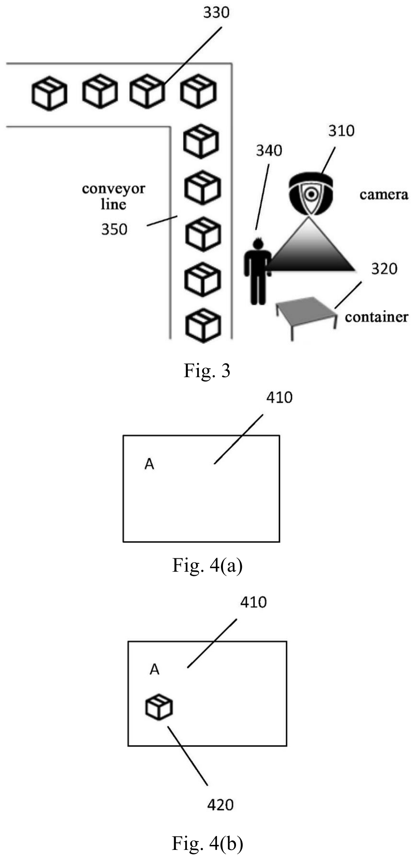

Exemplarily, as shown in Fig. 3, a camera 310 can be installed at the first preset position in the warehouse-in area, so that when the camera 310 detects that a container 320 without goods placed therein enters its acquisition range, the camera 310 can acquire a first image of the container 320. Then, the acquired first image is identified to obtain the first container identifier of the container 320, and sends the first container identifier to the management platform. In order to palletizing goods 330, the goods 330 can be transferred through a conveyor line 350 or AGV. In this way, the goods 330 will be transferred to a staff 340 in turn. After that, the staff 340 can remove the goods 330 from the conveyor line 350 and place the goods 330 into the container 320.

In order to verify the accuracy and availability of the obtained first container identifier and further improve the accuracy of the established binding relationship between goods and the container, the management platform 200 can verify the first container identifier obtained by itself.

Based on this, optionally, in a specific implementation,
the management platform 200 is further configured to perform steps 11-12 as follows:
Step 11: determining a verification result about the first container identifier when obtaining the first container identifier of the first container;
Step 12: if the verification result represents that verification of the first container identifier is successful, outputting the palletizing instruction for instructing to place goods in the first container.

In this specific implementation, when the management platform 200 obtains the first container identifier of the first container, the management platform 200 can verify the first container identifier, and thus obtains the verification result about the first container identifier.

Optionally, in order to facilitate the management of individual containers in the warehouse-in area, a first container identifier list can be established in the management platform 200 in advance. In this way, when the management platform 200 obtains the first container identifier, the management platform 200 can search for the first container identifier in the first container identifier list, and take the search result as the verification result of the first container identifier. If the first container identifier is searched, verification of the first container identifier is successful; if the first container identifier is not searched, verification of the first container identifier fails.

Optionally, individual containers are scheduled by the management platform 200. When the management platform 200 schedules each container to each warehouse-in area, an association relationship can be established among an area identifier of the warehouse-in area, a position identifier of a designated position in the warehouse-in area to which the container is scheduled, a device identifier of the first image acquisition device 100 corresponding to the designated position, and a container identifier of the container scheduled to the warehouse-in area. Thus, when the first container identifier of the first container sent by the first image acquisition device 100 is obtained, the association relationship corresponding to the first image acquisition device 100 can be determined. After that, the first container identifier is compared with a container identifier associated with the first image acquisition device 100 in the above association relationship, and a comparison result is used as the verification result of the first container identifier. If the container identifier associated with the first image acquisition device 100 includes a container identifier consistent with the first container identifier, verification of the first container identifier is successful; if the container identifier associated with the first image acquisition device 100 does not include a container identifier consistent with the first container identifier, verification of the first container identifier fails.

Optionally, after obtaining the first container identifier, the management platform 200 can send, to a check object, a check instruction that carries the device identifier of the first image acquisition device 100 and is used for instructing to check the first container identifier of the first container. The check object can be a staff or a robot used for identifier check, which is not limited here. In this way, according to the device identifier of the first image acquisition device 100, the check object can use a PDA (Personal Digital Assistant) to obtain the first container identifier of the first container without goods placed therein within the acquisition range of the first image acquisition device 100, and upload the obtained first container identifier to the management platform 200. Thus, the management platform 200 can compare the first container identifier obtained by itself with a calibrated first container identifier uploaded by the check object, and take a comparison result as the verification result of the first container identifier. If the first container identifier obtained by the management platform 200 is consistent with the calibrated first container identifier uploaded by the check object, verification of the first container identifier is successful; if the first container identifier obtained by the management platform 200 is inconsistent with the calibrated first container identifier uploaded by the check object, the first verification of container identifier fails.

Optionally, the first image acquisition device 100 has an image identification function; and when the first image information includes the first container identifier of the first container in the first image, the first image acquisition device 100 can also send the first image to the management platform 200, and the management platform 200 can receive the first image and identify the first container identifier of the first container in the first image, and verify the received first container identifier sent by the first image acquisition device 100 by using the identified first container identifier of the first container, to obtain the verification result of the first container identifier. If the received first container identifier sent by the first image acquisition device 100 is consistent with the identified first container identifier, verification of the first container identifier is successful; if the received first container identifier sent by the first image acquisition device 100 is inconsistent with the identified first container identifier, verification of the first container identifier verification fails.

If the above verification result represents that verification of the first container identifier is successful, the management platform 200 can output the palletizing instruction for instructing to place goods in the first container, so that the staff or the palletizing robot receives the palletizing instruction and places the goods in the first container.

The above output palletizing instruction can be sending the above palletizing instruction to a preset address; or can be displaying the above palletizing instruction on the display screen of the management platform 200; or can be issuing a preset prompt sound, which are all reasonable, and are not limited specifically by the embodiment of the present application.

Optionally, if the above verification result represents that verification of the first container identification fails, the management platform 200 can output prompt information for prompting that there is an error in the first container identification of the first container, so that the staff can receive the prompt information and check the first container.

S204: the first image acquisition device 100 acquires a second image of the first container with goods placed therein.

S205: the first image acquisition device 100 sends second image information of the second image to the management platform.

The second image information includes the second image or a goods identifier of a piece of newly added goods in the first container in the second image compared with a previous image of the second image.

S206: the management platform 200 receives the second image information sent by the first image acquisition device, and obtains the goods identifier of the piece of newly added goods in the first container based on the second image information.

S207: the management platform 200 binds the first container identifier with the goods identifier.

After the first container is scheduled to the above warehouse-in e area, goods can be placed in the first container in turn. In the above process of placing goods, the first image acquisition device 100 can still continuously acquire the second image of the first container with goods placed therein. Moreover, when the first image acquisition device 100 acquires the second image of the first container with goods placed therein, the first image acquisition device 100 can determine the second image information of the second image and send the second image information of the second image to the management platform 200. In this way, the management platform 200 can receive the second image information of the second image and determine the goods identifier of the piece of newly added goods in the first container in the second image compared to a previous image of the second image.

The second image information includes the second image or the goods identifier of the piece of newly added goods in the first container in the second image, compared with the previous image of the second image.

Optionally, when the second image information includes the second image, the first image acquisition device 100 can send the acquired second image to the management platform 200. The management platform 200 can receive the second image, and compare image content of the second image with image content of the previous image of the second image to determine the piece of newly added goods in the first container in the second image, and identify the goods identifier of the piece of newly added goods in the first container in the second image.

Optionally, when the first image acquisition device 100 has an image identification function, the second image information may include the goods identifier of the piece of newly added goods in the first container in the second image compared with the previous image of the second image. As the quantity of goods placed in the first container gradually increases, the quantity of goods included in the image acquired by the first image acquisition device 100 also increases. Therefore, the first image acquisition device 100 can compare the difference in image content between an image acquired at a previous acquisition moment and an image acquired at a later acquisition moment later than the previous acquisition moment, to determine a piece of goods placed in the container within a time range between the acquisition moments of the above two images. That is, when the first image acquisition device 100 acquires each second image of the first container with goods placed therein, the first image acquisition device 100 can compare image content of the second image with image content of the previous image of the second image, so as to determine the piece of newly added goods in the first container within the time range between the acquisition moments of the above two images. Each time the piece of newly added goods is determined, an image including the piece of newly added goods is an image about the newly piece of added goods acquired by the first image acquisition device 100 for the first time. Therefore, the identifier identification can be performed on the second image of the first container in which the piece of newly added goods is determined, so that the identified goods identifier of the piece of newly added goods is the goods identifier of the piece of newly added goods identified by the first image acquisition device 100 for the first time. Since the first image acquisition device 100 identifies the goods identifier of the newly added goods for the first time, the first image acquisition device 100 has not sent the goods identifier of the piece of newly added goods to the management platform 200, and the management platform 200 has not established the binding relationship between the piece of newly added goods and the first container. In this way, in order to establish the binding relationship between the first container and the piece of newly added goods, the first image acquisition device 100 can send the goods identifier of the piece of newly added goods to the management platform 200.

A piece of goods can be uniquely determined by the above goods identifier, which can be at least one of goods symbol, goods number, goods two-dimensional code information and the like. In other words, when the at least one of the goods symbol, the goods number, goods two-dimensional code information and the like is identified, the identified information can be used as the goods identifier of the piece of goods; moreover, in order to better identify the piece of goods, goods information such as the shape and color of the piece of goods and the like can be identified, to obtain the goods information and goods identifier of the piece of goods, in order to facilitate the management platform 200 to identify the piece of goods by using the goods information and goods identifier.

Based on this, since the first image acquisition device 100 can continuously capture the image of the first container, the piece of newly added goods placed in the first container at each acquisition moment can be determined based on the images acquired by the first image acquisition device 100. Thus, as goods are placed on the first container one by one, the first image acquisition device 100 can acquire multiple second images of the first container with the goods placed therein. In this way, by comparing image content of each second image with that of the previous image of the second image, a piece of newly added goods in the first container in the second image can be determined, and then, the identifier of the piece of newly added goods is identified to determine the goods identifier of the piece of newly added goods. When the management platform 200 obtains the goods identifier of the piece of newly added goods in the first container, the management platform 200 can bind the obtained goods identifier of each piece of newly added goods with the first container identifier. In this way, if no newly added goods is placed into the first container, the management platform 200 has bound the first container with the goods identifier of each piece of goods placed in the first container.

As an example, as shown in Figs. 4(a) - 4(c), Fig. 4(a) shows a first image of a container 410 without goods placed therein acquired by the first image acquisition device. The first image acquisition device can send the first image to the management platform, so that the management platform can receive the first image and perform identifier identification on the first image to obtain a first container identifier A of the container 410. Alternatively, when the first image acquisition device has an image identification function, the first image acquisition device can perform identifier identification on the first image to obtain the first container identifier A of the container 410, and send the first container identifier A to the management platform, so that the management platform obtains the first container identifier A.

Fig. 4(b) shows a second image of the container 410 with one piece of goods 420 placed therein acquired by the first image acquisition device, by comparing the second image with a previous image of the container 410 without goods placed therein of the second image. The first image acquisition device can send the second image to the management platform, and the management platform can compare the second image with the previous image of the second image to determine the piece of newly added goods 420 in the second image, and identify the goods identifier of the piece of newly added goods, to obtain a goods identifier B of the piece of newly added goods 420. Alternatively, when the first image acquisition device has an image identification function, the first image acquisition device can identify the piece of newly added goods 420 in the container 410 in the second image. Furthermore, the first image acquisition device can identify the second image, identify the goods identifier B of the piece of goods 420, and send the goods identifier B to the management platform. In this way, after the management platform obtains the goods identifier B, the management platform can bind the goods identifier B with the first container identifier A.

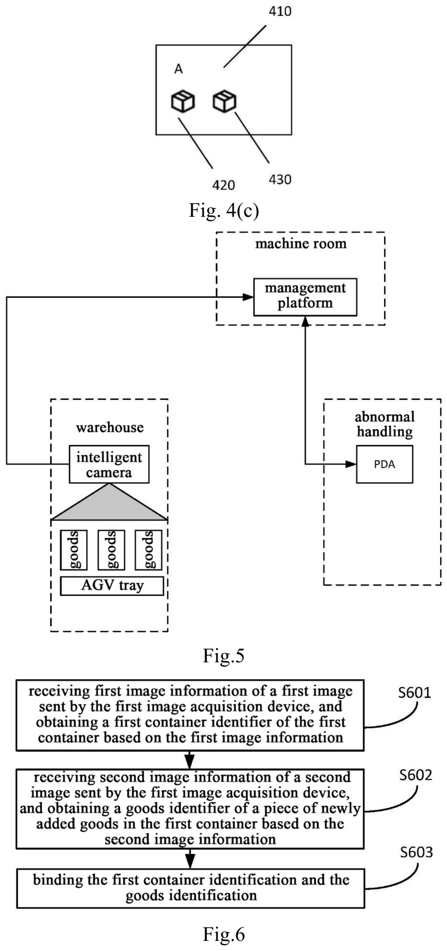

Fig. 4(c) shows a second image of the container 410 with a piece of goods 430 and a piece of goods 420 placed therein acquired by the first image acquisition device. The first image acquisition device can send the second image of container 410 with the piece of goods 430 and the piece of goods 420 placed therein to the management platform. The management platform can determine a piece of newly added goods 430 in the container 410 in the second image by comparing the second image with a previous image of container 410 with only the piece of goods 420 placed therein, and identify a goods identifier C of the piece of newly added goods 430. Alternatively, the first image acquisition device can determine the piece of newly added goods 430 in the container 410 in the second image by comparing the second image with the previous image of container 410 with only the piece of goods 420 placed therein. Further, the first image acquisition device can perform identifier identification on the second image to identify the goods identifier C of the piece of goods 430, and send the goods identifier C to the management platform. In this way, the management platform can bind the goods identifier C with the first container identifier A after obtaining the goods identifier C. At this point, the management platform binds the first container identifier A with the goods identifier B, and binds the first container identifier A with the goods identifier C.

It can be seen from the above that, by applying the solutions provided by the embodiment of the present application, both the container identifier and goods identifier are obtained by identifying the images acquired by the first image acquisition device. Thus, compared with the identification by manual scanning, the identification efficiency is higher; during placing goods, a piece of newly added goods in the container can be determined by comparing adjacent images, and then the goods identifier of the piece of newly added goods in the container can be identified, enabling to effectively avoid the omission of goods and improve the accuracy of identifier identification; in addition, the binding of the container identifier with the goods identifier is realized through the cooperation of the management platform and the image acquisition device, which can improve the binding efficiency compared with the manual binding method.

Optionally, in a specific implementation, the first image acquisition device 100 has an image identification function;
the first image acquisition device 100 is specifically configured to perform identifier identification on the first image to obtain the first container identifier of the first container; and/or, identify a goods identifier of a piece of newly added goods in the first container in the second image based on image content of the second image and image content of the previous image of the second image.

In this specific implementation, the first image acquisition device 100 may has the image identification function. The first image acquisition device 100 can perform identifier identification on the first image of the first container when acquiring the first image, to obtain the first container identifier of the first container; and/or, the first image acquisition device 100 can identify, when acquiring the second image of the first container, the goods identifier of the piece of newly added goods in the first container in the second image based on image content of the second image and image content of the previous of the second image , which includes the following three cases:
Case 1: The first image acquisition device 100 can perform identifier identification on the first image of a first container when acquiring the first image to obtain the first container identifier of the first container. Moreover, the first image acquisition device 100 can identify, when acquiring the second image of the first container, a goods identifier of a piece of newly added goods in the first container in the second image based on image content of the second image and image content of a previous image of the second image. In this way, the first container identifier of the first container and the goods identifier of the piece of goods placed in the first container both are identified by the first image acquisition device, and the first image acquisition device can send the identified first container identifier of the first container, and the identified goods identifier of the piece of newly added goods in the first container during goods palletizing, to the management platform 200. The management platform does not need to perform an identifier identification task, and only needs to establish a binding relationship between the first container identifier of the first container and the goods identifiers of the goods placed in the first container, which improves the efficiency of the management platform.
Case 2: The first image acquisition device 100 can perform identifier identification on a first image of a first container when acquiring the first image to obtain the first container identifier of the first container, and send the identified first container identifier of the first container to the management platform 200. After sending the first container identifier of the first container to the management platform, the first image acquisition device can acquire the second image of the first container and send the second image to the management platform 200. The management platform 200 can determine a piece of newly added goods in the first container in each received second image based on image content of the second image and image content of a previous image of the second image, and identify the goods identifier of the piece of newly added goods. Then, the binding relationship between the first container identifier of the first container and the goods identifiers of the goods placed in the first container is established. In this way, because the first image acquisition device 100 does not need to identify the goods identifiers of goods placed in the first container, the calculating resources of the first image acquisition device can be saved, and the data transmission efficiency of the first image acquisition device can be improved, and further the work efficiency of the information management system is improved.
Case 3: A goods identifier-identifying model can be set in the first image acquisition device, so that the first image acquisition device 100 can send the first image of the first container to the management platform when acquiring the first image. The management platform can receive the first image and perform identifier identification on the first image to obtain the first container identifier of the first container. During goods palletizing, the first image acquisition device can acquire a second image of the first container, and determine a piece of newly added goods in the first container in each acquired second image based on image content of the second image and image content of a previous image of the second image, and identify the goods identifier of the piece of newly added goods, and send the identified goods identifier of the piece of newly added goods to the management platform 200. Further, the management platform 200 can establish a binding relationship between the first container identifier of the first container and the goods identifiers of goods placed in the first container. In this way, the management platform 200 can identify the container identifier of the first container by itself and verify the container identifier, which improves the accuracy of container identifier.

In this way, when the first image acquisition device has an image identification function, the container identifier of the first container and the goods identifier of the piece of newly added goods in the first container can be identified by the first image acquisition device, or can be identified cooperatively by the first image acquisition device and the management platform. Compared with the manual identification method, the identification efficiency can be provided.

Optionally, in a specific implementation,
the first image acquisition device 100 is specifically configured to send the first image to the management platform 200, and send the second image to the management platform 200;
the management platform 200 is specifically configured to perform identifier identification on the first image to obtain the first container identifier of the first container in the first image; identify a goods identifier of a piece of newly added goods in the first container in the second image based on image content of the second image and image content of a previous image of the second image.

In order to save calculating resources of the first image acquisition device and ensure the data transmission efficiency of the first image acquisition device, the container identifier of the first container and the goods identifier of the piece of newly added goods in the first container can be identified by the management platform.

In other words, the first image acquisition device 100 can send the first image of the first container to the management platform 200 after acquiring the first image. In this way, the management platform 200 can receive the first image sent by the first image acquisition device 100, and perform identifier identification on the first image to obtain the first container identifier of the first container in the first image.

Furthermore, in the subsequent process of goods palletizing, the image acquisition device can send the second image of the first container to the management platform 200 after acquiring the second image. The management platform 200 can receive the second image sent by the first image acquisition device 100, and identify the goods identifier of the piece of newly added goods in the first container in the second image based on the image content of the second image and the image content of the previous image of the second image.

In this way, the first image acquisition device only needs to acquire the images of the first container, and sends the acquired images to the management platform. The management platform can receive the images sent by the first image acquisition device, and identify the first container identifier of the first container and the goods identifier of the piece of newly added goods in the first container by itself. In this way, the calculating resources of the first image acquisition device can be saved, and the image acquisition device can maintain higher data transmission efficiency, and further the information processing efficiency of the information processing system can be improved.

For each container, the quantity of goods that can be placed in the container is limited. Based on this, the maximum quantity of goods that can be loaded in the container can be determined according to size information of the container and estimated goods size information of the goods placed in the container, and a container goods loading capacity of the container is determined based on the maximum quantity and an actual production need. In this way, when the quantity of goods placed in the container reaches the container goods loading capacity, placing goods in the container can be stopped. After that, the container is transferred to a preset warehouse-out area, and goods are unloaded, and the container is emptied.

Based on this, optionally, in a specific implementation, the management platform 200 is further configured to output a stop instruction for instructing to stop placing goods in the first container when detecting an identifier quantity of the obtained goods identifiers reaches a preset container goods loading capacity, so that a palletizing robot or a staff stops placing goods in the first container.

In this specific implementation, for the first container, the container goods loading capacity of the first container can be preset as a preset container goods loading capacity of the first container. The preset container goods loading capacity can be set according to actual needs, such as 5, 10, etc., which are all reasonable, and are not limited in the embodiment of the present application.

Optionally, a maximum container goods loading capacity of the first container can be determined based on size information of the first container and goods size information of goods placed in the first container. Then, the preset goods container loading capacity of the first container can be determined based on the maximum container goods loading capacity. As an example, according to the size information of the first container and the goods size information of the goods placed in the first container, the maximum container goods loading capacity of the first container is determined to be 10; if it is desired that the quantity of goods loaded in the first container reaches the maximum container goods loading capacity in order to improve the utilization efficiency of the container, the preset container goods loading capacity of the first container can be determined to be 10; alternatively, if the load of a transfer robot is small, considering the load of the transfer robot, the preset container goods loading capacity of the first container can be determined to be 6, etc., which are all reasonable and not limited here.

In this way, the management platform 200 can obtain the preset container goods loading capacity of the first container, and output the stop instruction for instructing to stop placing goods in the first container when the quantity of the received goods identifiers of goods placed in the first container is detected to reach the preset container goods loading capacity.

When the information processing system includes a palletizing robot used to perform the goods palletizing task, if the palletizing robot uses the first container for goods palletizing, the management platform 200 can issue a stop instruction for instructing to stop placing goods in the first container to the palletizing robot, and the palletizing robot can receive the stop instruction and control itself to stop placing goods in the first container. As mentioned before, the above palletizing robot is a robot with a manipulator.

Alternatively, when goods are palletized manually, the management platform 200 can issue a stop instruction for instructing to stop placing goods in the first container to a staff who is palletizing goods by using the first container, so that the staff can receive the stop instruction and stop placing goods in the first container.

From above, the management platform can output the stop instruction for instructing to stop placing goods in the first container when detecting that the identifier quantity of the obtained goods identifiers reaches the preset container goods loading capacity, so that a palletizing robot or a staff stops placing goods in the first container. That is, the management platform determines whether the quantity of goods loaded in the first container reaches the container goods loading capacity of the first container according to the identifier quantity of the obtained goods identifiers, so as to avoid that the quantity of goods loaded in the first container exceeds the container goods loading capacity of the first container.

In order to ensure that the management platform 200 has received the goods identifier of each piece of goods placed in the first container without omission of goods identifier, or in order to avoid the accuracy of binding information being affected by the repeated identification of goods identifier, the quantity of goods identifiers sent by the first image acquisition device 100 can be reviewed, to determine whether the quantity of goods identifiers identified by the first image acquisition device 100 is consistent with the quantity of goods actually placed in the first container.

Based on this, optionally, in a specific implementation,
the management platform 200 is further configured to determine a goods review result when detecting that the identifier quantity of obtained goods identifiers reaches the container goods loading capacity; output first prompt information for prompting to enter goods identifiers when the goods review result represents that the quantity of goods placed in the first container is greater than the container goods loading capacity; receive goods identifiers sent by a target object in response to the first prompt information, and compare the received goods identifiers sent by the target object with the recorded goods identifiers to obtain a to-be-supplementarily-entered goods identifier to be bound; and bind the first container identifier with the to-be-supplementarily-entered goods identifier; wherein the goods identifiers sent by the target object are obtained by the target object scanning goods identifiers by using a preset scanning device.

In this specific implementation, the management platform 200 can determine the goods review result when it detects that the identifier quantity of the obtained goods identifiers reaches the container goods loading capacity of the first container. The obtained goods identifiers obtained by the management platform 200 can be the received goods identifiers identified and uploaded by the first image acquisition device 100 with image identification function, or goods identifiers identified by the management platform 200 itself based on the received second images uploaded by the first image acquisition device 100, and the goods identifiers obtained by the management platform 200 are goods identifiers obtained after the first container is obtained, rather than all goods identifiers received by the management platform in the history.

Optionally, the first image acquisition device 100 can be a 3D device with image identification function; the management platform 200 can send a goods review instruction to the first image acquisition device 100 when detecting that the identifier quantity of the obtained goods identifiers reaches the container goods loading capacity. In this way, the first image acquisition device 100 can receive the goods review instruction, and acquire a third image about the first container, determine the quantity of goods placed in the first container according to depth information of the goods placed in the first container in the third image and pre-stored size information of goods for goods palletizing this time. After that, the first image acquisition device 100 can determine the goods review result based on the quantity of the goods placed in the first container and the identifier quantity of the goods identifiers sent by itself to the management platform 200, and send the goods review result to the management platform 200, so that the management platform 200 can receive the goods review result sent by the first image acquisition device 100.

Optionally, the management platform 200 can send an image acquisition instruction to the first image acquisition device 100 when detecting that the identifier quantity of the obtained goods identifiers reaches the container goods loading capacity, and receive the third image about the first container acquired by the first image acquisition device 100 based on the image acquisition instruction, then determine depth information of goods placed in the first container in the third image and pre-stored size information of goods for goods palletizing this time, determine the quantity of goods placed in the first container, and then determine the goods review result based on the quantity of goods placed in the first container and the identifier quantity of the obtained goods identifiers.

If the goods review result represents that the quantity of the goods is greater than the container goods loading capacity, then the identifier quantity of the obtained goods identifiers obtained by the management platform 200 is the container goods loading capacity, and the quantity of goods actually placed in the first container is greater than the container goods loading capacity, that is, there is omission in identifying the goods identifier, and the identifier quantity of the identified goods identifiers is less than the quantity of goods actually placed in the first container. In this case, the management platform 200 outputs the first prompt information for prompting to enter goods identifiers, so that the target object receives the above first prompt information, and scans the goods identifiers of the goods placed in the first container by using the preset scanning device to obtain the goods identifiers of all the goods placed in the first container. After that, the target object can send the goods identifiers of all the goods placed in the first container mentioned to the management platform 200 as the goods identifiers sent by the target object in response to the prompt information.

The target object can be a staff or a robot used to perform the identifier scanning task, for example, a scanning robot equipped with a preset scanning device, or a manipulator that can use a preset scanning device, etc.

Outputting the first prompt information for prompting to enter goods identifiers can include sending the prompt information to a preset mailbox; or displaying the prompt information on the display screen of the management platform 200; or issuing a preset prompt sound, which are all reasonable, and are not limited specifically in the embodiment of the present application.

That is to say, if the above goods review result represents that the above quantity of the goods is greater than the above quantity of the goods identifiers, it can be determined that there is omission of the identified goods identifiers. Therefore, the management platform 200 can output the first prompt information to prompt the target object that there is omission in identifier identification, and it is necessary to enter the goods identifiers of all the goods placed in the first container again. In this way, after receiving the above prompt information, the target object can scan the goods identifiers by using the preset scanning device, to obtain the goods identifiers of all the goods, and send all the goods identifiers to the management platform 200.

Further, the management platform 200 can receive the goods identifiers sent by the target object in response to the first prompt information, and compare the received goods identifiers sent by the target object with the recorded goods identifiers obtained by itself, so as to obtain the to-be-supplementarily-entered goods identifier to be bound. After that, the management platform 200 can bind the first container identifier with the to-be-supplementarily-entered goods identifier, so that the management platform 200 binds the first container identifier with the goods identifiers of all the goods placed in the first container, avoiding the omission of the goods identifier.

Optionally, in a specific implementation,
the management platform 200 is further configured to output second prompt information for prompting to verify a goods identifier when the goods review result represents that the quantity of goods placed in the first container is less than the container goods loading capacity; receive goods identifiers sent by a target object in response to the second prompt information, and compare the received goods identifiers sent by the target object with the recorded goods identifiers to obtain a redundant goods identifier to be unbound; and unbind the first container identifier from the redundant goods identifier.

In this specific implementation, if the goods review result represents that the quantity of the goods is less than the container goods loading capacity, then the identifier quantity of goods identifiers obtained by the management platform 200 is greater than the container goods loading capacity, and the quantity of goods actually placed in the first container is less than the container goods loading capacity. That is, the identifier quantity of the goods identifiers obtained by the management platform 200 is greater than the quantity of goods actually placed in the first container.

In this case, the management platform 200 outputs the second prompt information for prompting verify the goods identifier, so that the target object receives the second prompt information, and scans the goods identifiers of the goods placed in the first container by using the preset scanning device to obtain the goods identifiers of all the goods placed in the first container. After that, the target object can send the goods identifiers of all the goods placed in the first container to the management platform 200 as the goods identifiers sent by the target object in response to the second prompt information.

In other words, if the above goods review result represents that the above quantity of the goods is less than the above quantity of the goods identifiers, it can be determined that there is a redundant goods identifier in the identified goods identifiers. Therefore, the management platform 200 can output the second prompt information to prompt the target object that there is the redundancy in identifier identification, and the goods identifiers of all the goods placed in the first container need to be entered again. In this way, after receiving the second prompt information, the target object can scan the goods identifiers by using the preset scanning device, to obtain the goods identifiers of all the goods, and send all of the goods identifiers to the management platform 200.

Further, the management platform 200 can receive the goods identifiers sent by the target object in response to the second prompt information, and compare the received goods identifiers sent by the target object with the recorded goods identifiers obtained by itself, so as to obtain the redundant goods identifier to be unbound. After that, the management platform 200 can unbind the first container identifier from the above redundant goods identifier, so that the management platform 200 binds the first container identifier with the goods identifiers of all the goods placed in the first container, avoiding the case where the first container identifier is bound with the redundant goods identifier due to the incorrect identification of goods identifiers.

Optionally, in a specific implementation, the first image acquisition device 100 has an image identification function;
the management platform 200 is specifically configured to send a goods review instruction to the first image acquisition device 100 when detecting that the identifier quantity of the obtained goods identifiers reaches the container goods loading capacity;
the first image acquisition device 100 is further configured to receive the goods review instruction and acquire a third image about the first container; perform object identification on the third image to obtain the quantity of goods placed in the first container; determine a goods review result based on the quantity of goods placed in the first container and the identifier quantity of the goods identifiers sent to the management platform, and send the goods review result to the management platform;
the management platform 200 is specifically configured to receive the goods review result sent by the first image acquisition device.

In this specific implementation, the first image acquisition device has an image identification function;
the management platform 200 can send a goods review instruction to the first image acquisition device 100 when detecting that the identifier quantity of the obtained goods identifiers reaches the container goods loading capacity.

The first image acquisition device 100 can receive the goods review instruction sent by the management platform 200 and acquire a third image about the first container, then perform object identification on the third image to obtain the quantity of goods placed in the first container. Performing the object identification on the third image refers to identifying each piece of goods placed in the first container in the third image to determine the quantity of the goods placed in the first container.

Then, the first image acquisition device 100 can determine the goods review result based on the quantity of goods placed in the first container and the identifier quantity of the goods identifiers sent to the management platform, and send the goods review result to the management platform 200. The management platform 200 can receive the goods review results sent by the first image acquisition device, and determine the subsequent execution strategy based on the obtained goods review result.

Optionally, in a specific implementation,
the management platform 200 is specifically configured to send an image acquisition instruction to the first image acquisition device when detecting that the identifier quantity of the obtained goods identifiers reaches the container goods loading capacity;
the first image acquisition device 100 is further configured to receive the image acquisition instruction to acquire a third image about the first container, and send the third image to the management platform;
the management platform 200 is specifically configured to receive the third image sent by the first image acquisition device; perform object identification on the third image to obtain the quantity of goods placed in the first container; determine the goods review result based on the quantity of the goods placed in the first container and the identifier quantity of the obtained goods identifiers.

In this specific implementation, the management platform 200 can send an image acquisition instruction to the first image acquisition device 100 when it detects that the identifier quantity of the obtained goods identifiers reaches the container goods loading capacity. The first image acquisition device 100 can receive the image acquisition instruction sent by the management platform 200, acquire the third image about the first container, and send the third image to the management platform.

After that, the management platform 200 can perform object identification on the third image to obtain the quantity of goods placed in the first container. Then, based on the quantity of goods placed in the first container and the identifier quantity of the obtained goods identifiers, the goods review result is determined. The obtained goods identifiers obtained by the management platform 200 are goods identifiers of goods placed in the first container obtained after the first container identifier of the first container is obtained, rather than all historical goods identifiers obtained by the management platform 200.

In this way, the management platform can determine the goods review result by itself according to the third image acquired by the first image acquisition device 100, and determine the subsequent execution strategy based on the goods review result.

In addition, when determining that the first container identifier has bound with the goods identifiers of all the goods in the first container, the management platform 200 can schedule the first container to the preset storage area.

Optionally, in a specific implementation, the information processing system provided by the embodiment of the present application further includes a transfer robot;
the management platform 200 is further configured to instruct the transfer robot to transfer the first container to a preset storage area when the goods review result represents that the quantity of the goods is the same as the container goods loading capacity.

In this implementation, the information processing system may further include a transfer robot for transferring a container in the warehouse-in area to a preset storage area. The transfer robot can be a robot with mobile function, and the transfer robot can have a manipulator or does not have the manipulator, which is no limited specifically here.

When the goods review result represents that the quantity of the goods is the same as the container goods loading capacity, there is no omission in goods identifier identification, and the identifier quantity of the identified identifiers is equal to the quantity of goods actually placed in the first container. Therefore, the management platform 200 has obtained the goods identifiers of all the goods placed in the first container. The management platform 200 has bound the first container identifier with the goods identifiers of all the goods in the first container, and the quantity of goods loaded in the first container has reached the preset container goods loading capacity. Based on this, the management platform 200 can instruct the transfer robot to transfer the first container to the preset storage area, and store the first container with goods placed therein in the storage area.

Optionally, in a specific implementation, the information processing system provided by the present application further includes a transfer robot;
the management platform 200 is further configured to instruct the transfer robot to transfer the first container to a preset warehouse-out area after binding the first container identifier with the to-be-supplementarily-entered goods identifier; and/or, instruct the transfer robot to transfer the first container to a preset warehouse-out area after unbinding the first container identifier form the redundant goods identifier.

In this specific implementation, after binding the first container identifier with the to-be-supplementarily-entered goods identifier, and/or after unbinding the first container identifier from the redundant goods identifier, the management platform 200 has bound the first container identifier with the goods identifiers of all the goods in the first container. Thus, the management platform 200 can instruct the transfer robot to transfer the first container to the preset storage area, and store the first container with goods placed in the above storage area.

In addition, optionally, if the management platform 200 detects that the quantity of the obtained identifiers does not reach the container goods loading capacity and no new goods identifier is obtained when the waiting time reaches a preset time interval, the management platform 200 can instruct the transfer robot to transfer the first container to the warehouse-out area. The above preset time interval can be set according to the actual needs, such as 10 seconds, 20 seconds, etc., which are all reasonable and are not specifically limited in the embodiment of the present application. In this way, by setting the preset time interval, it can avoid that the first container stops in place for a long time waiting for goods loading when there is no goods to be loaded in the warehouse-in area, which extends the time of goods circulation and reduce the overall work efficiency.

Usually, for a certain kind of goods, the speed of goods palletizing for each piece of goods in this kind of goods is relatively fixed, that is, the speed of placing this kind of goods in the container is relatively fixed. Based on this, for each kind of goods, the goods loading speed for this kind of goods can be estimated in advance, and then the time required to load this kind of goods, the quantity of which is the container goods loading capacity, in the first container can be determined.

Optionally, in a specific implementation, the managing platform 200 can perform the following steps 21-22.
Step 21: determining a theoretical moment at which the last piece of goods is loaded based on the container goods loading capacity and a preset goods loading speed;
Step 22: instructing the transfer robot to move to the warehouse-in area when detecting that a current moment is before the theoretical moment and a time interval between the current moment and the theoretical moment is a preset duration; wherein, the preset duration is determined based on a moving speed of the transfer robot.

In this specific implementation, when the transfer robot used for transferring the container and the palletizing robot used for palletizing goods in this system are not the same robot, the management platform 200 can determine the theoretical moment at which the last piece of goods is loaded based on the container goods loading capacity and the preset goods loading speed, and determine a preset duration required for the transfer robot to move from an area where the transfer robot is currently located to the warehouse-in area based on the moving speed of the transfer robot.

Optionally, the management platform 200 can determine the theoretical moment at which the last piece of goods is loaded based on the container goods loading capacity and the preset goods loading speed upon receiving a preset quantity of goods identifiers. The preset quantity can be set according to the actual needs, for example, 1 container, half of the container goods loading capacity, etc., which are all reasonable and are not specifically limited in the embodiment of the present application.

After that, when the management platform 200 detects that the current moment is before the theoretical moment and the time interval between the current moment and the theoretical moment is a preset duration, the management platform 200 can instruct the transfer robot to move to the warehouse-in area. In this way, when the transfer robot is moved to the warehouse-in area, the quantity of goods placed in the first container is close to or reaches the container goods loading capacity. In this way, by instructing the transfer robot to move in advance, the waiting time for the transfer robot to move can be shortened, thus, the overall work efficiency can be improved.

In transferring the goods out of the warehouse, each container to be transferred in the storage area can be transferred to a preset warehouse-out area, and goods in each container can be unloaded in the warehouse-out area, and each container can be emptied. After each container is emptied, the binding relationship between the container identifier of the container and each goods identifier bound with the container can be unbound.

Based on this, optionally, in a specific implementation, the information processing system provided by the embodiment of the present application further includes a second image acquisition device; wherein, the second image acquisition device is installed at a second preset position, and an acquisition area of the second image acquisition device includes a preset warehouse-out area;
the second image acquisition device is configured to acquire, when a second container without goods placed therein is detected in the warehouse-out area, a fourth image about the second container and send third image information of the fourth image to the management platform 200, wherein, the third image information includes the fourth image or a second container identifier of the second container in the fourth image;
the management platform 200 is further configured to receive the third image information sent by the second image acquisition device, and obtain the second container identifier of the second container based on the third image information; and unbind the second container identifier and a goods identifier bound from the second container identifier.

In this specific implementation, in order to unbind the binding relationship between each piece of goods and a container, the second image acquisition device can be installed at the second preset position, so that the acquisition area of the second image acquisition device can include the above warehouse-out area. When each container is transferred to the warehouse-out area, the second image acquisition device installed at the second preset position for image acquisition of the warehouse-out area can acquire an image of the container.

The second preset position can be set according to actual needs, for example, it can be a top of the warehouse-out area, such as a ceiling, etc., which is reasonable and is not specifically limited in the embodiment of the present application.

Optionally, considering that an acquisition range of each second image acquisition device is limited, the installation quantity and installation locations of second image acquisition devices in this system can be determined according to a size of the warehouse-out area, device parameters of the second image acquisition device and other information, so that the acquisition range of the installed second image acquisition device can cover at least the warehouse-out area. That is to say, multiple second image acquisition devices can be installed, and the acquisition range of each second image acquisition device covers the warehouse-out area. Of course, it is also possible to install one second image acquisition device, and the acquisition range of the second image acquisition device can cover all designated positions in the warehouse-in area.

The second image acquisition device can acquire, when the second container without goods placed therein is detected in the warehouse-out area, the fourth image about the second container, determine the third image information of the fourth image and send the third image information to the management platform 200.

Optionally, when an unloading object has unloaded all goods loaded in the second container, the unloading object can trigger a control for controlling the second image acquisition device to issue an image acquisition signal to the second image acquisition device; when the second image acquisition device detects the image acquisition signal, the second image acquisition device can acquire the fourth image of the second container without goods placed therein.

In this way, the management platform can receive the third image information of the fourth image, and obtain the second container identifier of the second container based on the third image information. Then the management platform 200 can determine each goods identifier bound with the second container identifier, and unbind the second container identifier from the goods identifier bound with the second container identifier.

Optionally, after the goods in the second container are emptied, the management platform 200 can unbind the second container identifier from the goods identifier. Further, the management platform 200 can instruct the transfer robot to transfer the second container back to the warehouse-in area, so that the second container can be used to load other goods.

Optionally, in a specific implementation, the second image acquisition device has an image identification function;
the second image acquisition device 100 is further configured to perform identifier identification on the fourth image to obtain the second container identifier of the second container.

In this specific implementation, the second image acquisition device has an image identification function. The second image acquisition device acquires, when the second container without goods placed therein is detected in the warehouse-out area, the fourth image about the second container, performs the identifier identification on the fourth image to obtain the second container identifier of the second container, and sends the second container identifier to the management platform 200.

In this way, the management platform 200 can receive the second container identifier of the second container and determine each goods identifier bound with the second container identifier. After that, the management platform 200 can unbind the second container identifier from the goods identifier bound with the second container identifier.

That is to say, when the second image acquisition device acquires the fourth image of the second container without goods placed therein, the second image acquisition device can identify the second container and send the second container identifier to the management platform 200. In this way, when the management platform 200 obtains the second container identifier again, the management platform 200 can unbind the second container identifier from each goods identifier bound with the second container identifier, to release the second container so that the second container can be scheduled again to the warehouse-in area for goods palletizing.

Optionally, in a specific implementation,
the second image acquisition device 100 is specifically configured to send the fourth image to the management platform;
the management platform 200 is further configured to perform identifier identification on the fourth image to obtain the second container identifier of the second container.

In this specific implementation, the third image information includes the fourth image. The second image acquisition device 100 can send the fourth image to the management platform after acquiring the fourth image. The management platform 200 can perform the identifier identification on the fourth image to obtain the second container identifier of the second container in the fourth image.

Then, the management platform 200 can determine each goods identifier bound with the second container identifier, and unbind the second container identifier from the goods identifier bound with the second container identifier.

In order to facilitate the understanding of the information processing method provided by the embodiment of the present application, it can be illustrated with a specific application example in Fig. 5.

As shown in Fig. 5, a management platform located in a machine room in the figure is the management platform in the information processing system provided by the present application; a warehouse in the figure is the warehouse-in area in the present application; an intelligent camera in the figure is the first image acquisition device in the information processing system provided by the present application, and the intelligent camera has an image identification function; an AGV tray in the figure is the first container used for palletizing goods in the present application; a PDA in the figure is the preset scanning device in the present application.

In transferring the goods into the warehouse, the AGV tray can be instructed to move to an acquisition range of the intelligent camera in the warehouse in advance. Further, the intelligent camera can acquire the first image of the AGV tray without goods placed therein, and identify a first container identifier of the AGV tray, and send the first container identifier to the management platform in the machine room.

In the process of placing goods on the AGV tray by the staff, the intelligent camera can acquire images of the AGV tray. In this way, when acquiring a second image of the AGV tray with goods placed therein, the intelligent camera can identify a goods identifier of a piece of newly added goods in the AGV tray in the second image compared with a previous image of the second image, based on image content of the second image and the previous image of the second image, and send the goods identifier of the piece of newly added goods to the management platform.

In this way, the management platform can obtain the first tray identifier and the goods identifier, and bind the first tray identifier with the goods identifier. When the identifier quantity of the goods identifiers received by the management platform reaches the tray goods loading capacity, the management platform can issue a goods review instruction to the intelligent camera. Thus, the intelligent camera can receive the goods review instruction, and can acquire a third image of the AGV tray, and then identify the third image, so as to obtain the quantity of goods placed in the AGV tray. After that, the intelligent camera can review based on the above quantity of the goods and the tray goods loading capacity of the AGV tray sent by the management platform, to obtain a review result, and send the review result to the management platform.

In this way, the management platform can receive the review result and output prompt information when the review result represents that the above quantity of the goods is different from the tray goods loading capacity. When receiving the prompt information, the staff can perform abnormal handling on the AGV tray by using PDA, that is, scan the goods identifiers of all the goods in the AGV tray by using PDA, and send the goods identifiers of all the goods to the management platform. Thus, by comparing the goods identifiers sent by the staff and the goods identifiers sent by the intelligent camera, the management platform can bind the first tray identifier with a to-be-supplementarily-entered goods identifier when determining that there is the to-be-supplementarily-entered goods identifier; unbind the binding relationship between the first container identifier and a redundant goods identifier when determining that there is the redundant goods identifier. In this way, by determining the quantitative relationship between the quantity of goods actually placed in the tray and the quantity of actually obtained goods identifiers, the omission of goods or mis-identification of identifier can be avoided, and the accuracy of the binding relationship for the first container identifier can be improved.

The management platform can instruct the transfer robot to transfer the first container to a preset storage area when the goods review result represents that the quantity of goods placed in the first container is the same as the container goods loading capacity, or, after binding the first container identifier with the to-be-supplementarily-entered goods identifier, or, after unbinding the first container identifier from the redundant goods identifier.

Later, when goods placed in the AGV tray need to be transferred out of the warehouse, the robot can be instructed to transfer the AGV tray to the warehouse-out area and transfer the goods out of warehouse. When the second image acquisition device in the warehouse-out area detects an AGV tray without goods placed therein, the second image acquisition device can acquire a tray image of the AGV tray, identify the first container identifier of the AGV tray, and report the first container identifier to the management platform. Upon receiving the first container identifier of the AGV tray again, the management platform can unbind the first container identifier of the AGV tray from each goods identifier bound with the first container identifier, to release the AGV tray, so that the AGV tray can be scheduled again.

Based on the same inventive concept, corresponding to the information processing system provided by the embodiment of the present application mentioned above, an embodiment of the present application further provides an information processing method, which is applied to the management platform in the information processing system, wherein the system further includes an first image acquisition device; wherein, the first image acquisition device is installed at a first preset position, and an acquisition area of the first image acquisition device includes a preset warehouse-in area.

Fig. 6 is a schematic flow diagram of the information processing method applied to the management platform in the information processing system provided by the embodiment of the present application. As shown in Fig. 6, the method can include the following steps S601-S603.

S601 : receiving first image information of a first image sent by the first image acquisition device, and obtaining a first container identifier of the first container based on the first image information.

The first image is obtained by the first image acquisition device acquiring an image of the first container when the first container without goods placed therein is detected in the warehouse-in area, and the first image information includes the first image or the first container identifier of the first container in the first image.

S602: receiving second image information of a second image sent by the first image acquisition device, and obtaining a goods identifier of a piece of newly added goods in the first container based on the second image information, wherein, the second image is obtained by the first image acquisition device acquiring an image of the first container with goods placed therein, and the second image information includes the second image or the goods identifier of the piece of newly added goods in the first container in the second image compared with a previous image of the second image.

S603: binding the first container identifier with the goods identifier.

It can be seen from the above that, by applying the solution provided by the embodiment of the present application, both the container identifier and goods identifier are obtained by identifying the images acquired by the first image acquisition device. Thus, compared with the identification by manual scanning, the identification efficiency is higher; during placing goods, a piece of newly added goods in the container can be determined by comparing adjacent images, and then the goods identifier of the piece of newly added goods in the container can be identified, enabling to effectively avoid the omission of goods and improve the accuracy of identifier identification; in addition, the binding of the container identifier with the goods identifier is realized through cooperation of the management platform and the image acquisition device, which can improve the binding efficiency compared with the manual binding method.

Optionally, in a specific implementation, obtaining the goods identifier of the piece of newly added goods in the first container based on the second image information, includes:
performing identifier identification on the first image to obtain the first container identifier of the first container in the first image; identifying the goods identifier of the piece of newly added goods in the first container in the second image based on image content of the second image and image content of the previous image of the second image.

Optionally, in a specific implementation, the method further includes:
determining a verification result about the first container identifier when obtaining the first container identifier of the first container; if the verification result represents that verification of the first container identifier is successful, outputting a palletizing instruction for instructing to place goods in the first container.

Optionally, in a specific implementation, the system further includes a palletizing robot; the method further includes:
outputting a stop instruction for instructing to stop placing goods in the first container when detecting that an identifier quantity of obtained goods identifiers reaches a preset container goods loading capacity, so that the palletizing robot or a staff stops placing goods in the first container.

Optionally, in a specific implementation, the method further includes:
determining a goods review result when detecting that the identifier quantity of the obtained goods identifiers reaches the container goods loading capacity;
outputting first prompt information for prompting to enter goods identifiers when the goods review result represents that the quantity of goods placed in the first container is greater than the container goods loading capacity;
receiving goods identifiers sent by a target object in response to the first prompt information, and comparing the received goods identifiers sent by the target object with the recorded goods identifiers to obtain a to-be-supplementarily-entered goods identifier to be bound; and binding the first container identifier with the to-be-supplementarily-entered goods identifier; wherein, the goods identifiers sent by the target object are obtained by the target object scanning goods identifiers of the goods placed in the first container by using a preset scanning device;
outputting second prompt information for prompting to verify a goods identifier when the goods review result represents that the quantity of goods placed in the first container is less than the container goods loading capacity; receiving goods identifiers sent by the target object in response to the second prompt information, and comparing the received goods identifiers sent by the target object with the recorded goods identifiers to obtain a redundant goods identifier to be unbound; and unbinding the first container identifier from the redundant goods identifier.

Optionally, in a specific implementation, the first image acquisition device has an image identification function; determining the goods review result, includes:
sending a goods review instruction to the first image acquisition device when detecting that the identifier quantity of the obtained goods identifiers reaches the container goods loading capacity, so that the first image acquisition device receives the goods review instruction and acquires a third image about the first container;
receiving the goods review result sent by the first image acquisition device, wherein, the goods review result is determined based on the quantity of goods placed in the first container and the identifier quantity of the goods identifiers sent to the management platform, wherein the quantity of goods placed in the first container is obtained by the first image acquisition device performing object identification on the third image.

Optionally, in a specific implementation, the first image acquisition device has an image identification function; determining the goods review result, includes:
sending an image acquisition instruction to the first image acquisition device when detecting that the identifier quantity of the obtained goods identifiers reaches the container goods loading capacity, so that the first image acquisition device receives the image acquisition instruction, to acquire a third image about the first container, and sends the third image to the management platform;
receiving the third image sent by the first image acquisition device;
performing object identification on the third image to obtain the quantity of goods placed in the first container; and determining the goods review result based on the quantity of the goods placed in the first container and the identifier quantity of the obtained goods identifiers.

Optionally, in a specific implementation, the system further includes a transfer robot; the method further includes:
instructing the transfer robot to transfer the first container to a preset storage area when the goods review result represents that the quantity of the goods placed in the first container is the same as the container goods loading capacity;
   and/or,
instructing the transfer robot to transfer the first container to a preset storage area after binding the first container identifier with the to-be-supplementarily-entered goods identifier;
   and/or,
instructing the transfer robot to transfer the first container to a preset storage area after unbinding the first container identifier from the redundant goods identifier.

Optionally, in a specific implementation, the method further includes:
determining a theoretical moment at which the last piece of goods is loaded based on the container goods loading capacity and a preset goods loading speed;
instructing the transfer robot to move to the warehouse-in area when detecting that a current moment is before the theoretical moment and a time interval between the current moment and the theoretical moment is a preset duration; wherein, the preset duration is determined based on a moving speed of the transfer robot.

Optionally, in a specific implementation, the system further includes a second image acquisition device; wherein, the second image acquisition device is installed at a second preset position, and an acquisition area of the second image acquisition device includes a preset warehouse-out area;
the method further includes:
receiving third image information sent by the second image acquisition device, and obtaining a second container identifier of a second container based on the third image information; wherein, the third image information is image information of a fourth image about the second container acquired by the second image acquisition device when the second container without goods placed therein is detected in the warehouse-out area, the third image information includes the fourth image or the second container identifier of the second container in the fourth image;
unbinding the second container identifier from a goods identifier bound with the second container identifier.

Optionally, in a specific implementation, obtaining the second container identifier of the second container, includes:
performing identifier identification on the fourth image to obtain the second container identifier of the second container.

The specific implementation of the information processing method applied to the management platform in the information processing system is the same as the specific implementation of the information processing system provided by the embodiment of the present application, which will not be repeated here.

Based on the same inventive concept, corresponding to the information processing system provided by the above embodiment of the present application, an embodiment of the present application further provides an information processing method, which is applied to a first image acquisition device in the information processing system, wherein the system further includes a management platform; wherein, the first image acquisition device is installed at a first preset position, and an acquisition area of the first image acquisition device includes a preset warehouse-in area.

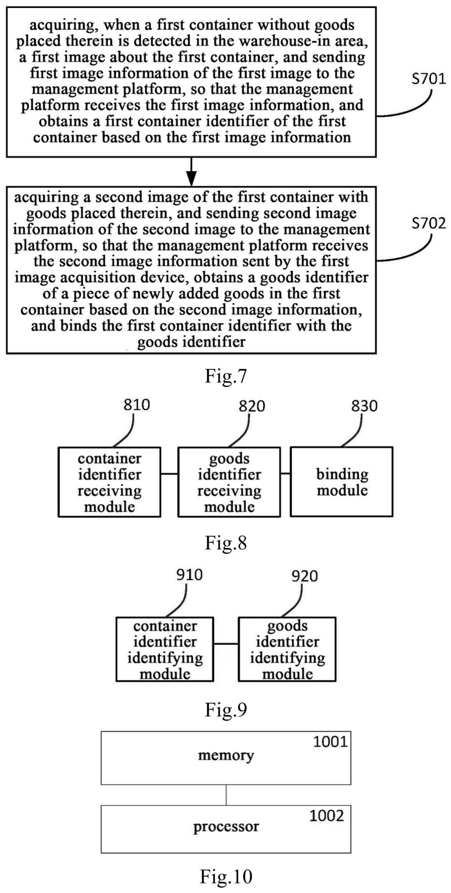

Fig. 7 is a schematic flow diagram of the information processing method applied to the first image acquisition device in the information processing system provided by the embodiment of the present application. As shown in Fig. 7, the method may include the following steps S701-S702.

S701: acquiring, when a first container without goods placed therein is detected in the warehouse-in area, a first image about the first container, and sending first image information of the first image to the management platform, so that the management platform receives the first image information, and obtains a first container identifier of the first container based on the first image information. Wherein, the first image information includes the first image or the first container identifier of the first container in the first image.

S702: acquiring a second image of the first container with goods placed therein, and sending second image information of the second image to the management platform, so that the management platform receives the second image information sent by the first image acquisition device, obtains a goods identifier of a piece of newly added goods in the first container based on the second image information, and binds the first container identifier with the goods identifier. Wherein, the second image information includes the second image or the goods identifier of the piece of newly added goods in the first container in the second image compared with a previous image of the second image.

It can be seen from the above that, by applying the solution provided by the embodiment of the present application, both the container identifier and the goods identifier are obtained by identifying the images acquired by the first image acquisition device. Thus, compared with the identification by manual scanning, the identification efficiency is higher; during placing goods, a piece of newly added goods in the container can be determined by comparing adjacent images, and then the goods identifier of the piece of newly added goods in the container can be identified, enabling to effectively avoid the omission of goods and improve the accuracy of identifier identification; in addition, the binding of the container identifier with the goods identifier is realized through cooperation of the management platform and the image acquisition device, which can improve the binding efficiency compared with the manual binding method.

Optionally, in a specific implementation, the first image acquisition device has an image identification function, the method further includes:
performing identifier identification on the first image to obtain the first container identifier of the first container; and/or, identifying the goods identifier of the piece of newly added goods in the first container in the second image based on image content of the second image and image content of the previous image of the second image.

Optionally, in a specific implementation, the first image acquisition device has an image identification function; the method further includes:
receiving a goods review instruction issued by the management platform when the identifier quantity of obtained goods identifiers is detected to reach the container goods loading capacity, and acquiring a third image about the first container; performing object identification on the third image to obtain the quantity of goods placed in the first container; determining the goods review result based on the quantity of goods placed in the first container and the identifier quantity of goods identifiers sent to the management platform, and sending the goods review result to the management platform, so that the management platform receives the goods review result sent by the first image acquisition device.

Optionally, in a specific implementation, the method further includes:
receiving an image acquisition instruction issued by the management platform when the identifier quantity of obtained goods identifiers is detected to reach the container goods loading capacity, acquiring a third image about the first container, and sending the third image to the management platform, so that the management platform receives the third image sent by the first image acquisition device, performs object identification on the third image to obtain the quantity of goods placed in the first container, and determines the goods review result based on the quantity of goods placed in the first container and the identifier quantity of the obtained goods identifiers.

The specific implementation of the above information processing method applied to the first image acquisition device in the information processing system is the same as the specific implementation of the information processing system provided by the above embodiment of the present application, which will not be repeated here.

Based on the same inventive concept, corresponding to the information processing method which is applied to the management platform in the information processing system provided by the embodiment of the present application as shown in Fig. 6, an embodiment of the present application further provides an information processing apparatus, which is applied to a management platform in the information processing system, wherein the system further includes a first image acquisition device; wherein, the first image acquisition device is installed at a first preset position, and an acquisition area of the first image acquisition device includes a preset warehouse-in area.

Fig. 8 is a schematic structure diagram of the information processing apparatus applied to the management platform of the information processing system provided by an embodiment of the present application. As shown in Fig. 8, the apparatus may include the following modules:
a container identifier receiving module 810, configured to receive first image information of a first image sent by the first image acquisition device, and obtain a first container identifier of a first container based on the first image information, wherein, the first image is obtained by the first image acquisition device acquiring, when the first container without goods placed therein is detected in the warehouse-in area, an image of the first container, the first image information includes the first image or the first container identifier of the first container in the first image;
a goods identifier receiving module 820, configured to receive second image information of a second image sent by the first image acquisition device, and obtain a goods identifier of a piece of newly added goods in the first container based on the second image information, wherein, the second image is obtained by the first image acquisition device acquiring an image of the first container with goods placed therein, the second image information includes the second image or the goods identifier of the piece of newly added goods in the first container in the second image compared with a previous image of the second image;
a binding module 830, configured to bind the first container identifier with the goods identifier.

It can be seen from the above that, by applying the solution provided by the embodiment of the present application, both the container identifier and the goods identifier are obtained by identifying the image acquired by the first image acquisition device. Thus, compared with the identification by manual scanning, the identification efficiency is higher; during placing goods, a piece of newly added goods in the container can be determined by comparing adjacent images, and then the goods identifier of the piece of newly added goods in the container can be identified, enabling to effectively avoid the omission of goods and improve the accuracy of identifier identification; in addition, the binding of the container identifier with the goods identifier is realized through cooperation of the management platform and the image acquisition device, which can improve the binding efficiency compared with the manual binding method.

Optionally, in a specific implementation, the goods identifier receiving module includes:
a first identification unit, configured to perform identifier identification on the first image to obtain the first container identifier of the first container in the first image; identify the goods identifier of the piece of newly added goods in the first container in the second image based on image content of the second image and image content of the previous image of the second image.

Optionally, in a specific implementation, the apparatus further includes:
a verification result acquisition unit, configured to determine a verification result about the first container identifier when the first container identifier of the first container is obtained; output a palletizing instruction for instructing to place goods in the first container if the verification result represents that verification of the first container identifier is successful.

Optionally, in a specific implementation, the apparatus further includes:
a first output unit, configured to output a stop instruction for instructing to stop placing goods in the first container when the identifier quantity of the obtained goods identifiers is detected to reach a preset container goods loading capacity, so that a palletizing robot or a staff stops placing goods in the first container.

Optionally, in a specific implementation, the apparatus further includes:
a result acquisition unit, configured to determine a goods review result when the identifier quantity of the obtained goods identifiers is detected to reach the container goods loading capacity; output first prompt information for prompting to entering goods identifiers when the goods review result represents that the quantity of goods placed in the first container is greater than the container goods loading capacity, receive goods identifiers sent by a target object in response to the first prompt information, compare the received goods identifiers sent by the target object with the recorded goods identifiers to obtain a to-be-supplementarily-entered goods identifier to be bound, and bind the first container identifier with the to-be-supplementarily-entered goods identifier, wherein the goods identifiers sent by the target object are obtained by the target object scanning goods identifiers of the goods placed in the first container by using a preset scanning device; output a second prompt information for prompting to verify a goods identifier when the goods review result represents that the quantity of goods placed in the first container is less than the container goods loading capacity, receive goods identifiers sent by the target object in response to the second prompt information, and compare the received goods identifiers sent by the target object with the recorded goods identifiers to obtain a redundant goods identifier to be unbound, and unbind the first container identifier from the redundant goods identifier.

Optionally, in a specific implementation, the first image acquisition device has an image identification function; the result acquisition unit is specifically configured to:
send a goods review instruction to the first image acquisition device when the identifier quantity of the obtained goods identifiers is detected to reach the container goods loading capacity, so that the first image acquisition device receives the goods review instruction and acquire a third image about the first container; receive the goods review result sent by the first image acquisition device, wherein, the goods review result is determined based on the quantity of goods placed in the first container and the identifier quantity of the goods identifiers sent to the management platform, and the quantity of goods placed in the first container is obtained by the first image acquisition device performing object identification on the third image.

Optionally, in a specific implementation, the first image acquisition device has an image identification function; the result acquisition unit is specifically configured to:
send an image acquisition instruction to the first image acquisition device when the identifier quantity of the obtained goods identifiers is detected to reach the container goods loading capacity, so that the first image acquisition device receives the image acquisition instruction to acquire a third image about the first container, and sends the third image to the management platform; receive the third image sent by the first image acquisition device; perform object identification on the third image to obtain the quantity of goods placed in the first container; and determine the goods review result based on the quantity of goods placed in the first container and the identifier quantity of the obtained goods identifiers.

Optionally, in a specific implementation, the system further includes a transfer robot; the apparatus further includes:
an instructing unit, configured to instruct the transfer robot to transfer the first container to the preset storage area when the goods review result represents that the quantity of goods placed in the first container is the same as the container goods loading capacity; and/or, instruct the transfer robot to transfer the first container to the preset storage area after the first container identifier is bound with the to-be-supplementarily-entered goods identifier; and/or, instruct the transfer robot to transfer the first container to the preset storage area after the first container identifier is unbound from the redundant goods identifier.

Optionally, in a specific implementation, the apparatus further includes:
a moment determining unit, configured to determine a theoretical moment at which the last piece of goods is loaded based on the container goods loading capacity and a preset goods loading speed; instruct the transfer robot to move to the warehouse-in area when a current moment is detected to be before the theoretical moment and a time interval between the current moment and the theoretical moment is a preset duration; wherein, the preset duration is determined based on a moving speed of the transfer robot.

Optionally, in a specific implementation, the system further includes a second image acquisition device; wherein, the second image acquisition device is installed at a second preset position, and an acquisition area of the second image acquisition device includes a preset warehouse-out area;
the apparatus further includes:
an information receiving unit, configured to receive third image information sent by the second image acquisition device, and obtain a second container identifier of the second container based on the third image information; wherein, the third image information is image information of a fourth image about the second container acquired by the second image acquisition device when the second container without goods placed therein is detected in the warehouse-out area, and the third image information includes the fourth image or a second container identifier of the second container in the fourth image; unbind the second container identifier from a goods identifier bound with the second container identifier.

Optionally, in a specific implementation, the information receiving unit is specifically configured to:
perform identifier identification on the fourth image to obtain the second container identifier of the second container.

Based on the same inventive concept, corresponding to the information processing method applied to the first image acquisition device in the information processing system provided by the above embodiment of the present application as shown in Fig. 7, an embodiment of the present application further provides an information processing apparatus, which is applied to a first image acquisition device in an information processing system, wherein the system further includes a management platform; wherein, the first image acquisition device is installed at a first preset position, and an acquisition area of the first image acquisition device includes a preset warehouse-in area.

Fig. 9 is a schematic structure diagram of the information processing apparatus applied to the first image acquisition device in an information processing system provided by the embodiment of the present application. As shown in Fig. 9, the apparatus may include the following modules:
a container identifier identifying module 910, configured to acquire, when a first container without goods placed therein is detected in the warehouse-in area, a first image about the first container, and send first image information of the first image to the management platform, so that the management platform receives the first image information, and obtains a first container identifier of the first container based on the first image information, wherein, the first image information includes the first image or the first container identifier of the first container in the first image;
a goods identifier identifying module 920, configured to acquire a second image of the first container with goods placed therein, and send second image information of the second image to the management platform, so that the management platform receives the second image information sent, obtains a goods identifier of a piece of newly added goods in the first container based on the second image information, and binds the first container identifier with the goods identifier. Wherein, the second image information includes the second image or the goods identifier of the piece of newly added goods in the first container in the second image compared with a previous image of the second image.

It can be seen from the above that, by applying the solution provided by the embodiment of the present application, both the container identifier and the goods identifier are obtained by identifying the images acquired by the first image acquisition device. Thus, compared with the identification by manual scanning, the identification efficiency is higher; during placing goods, a piece of newly added goods in the container can be determined by comparing adjacent images, and then the goods identifier of the piece of newly added goods in the container can be identified, enabling to effectively avoid the omission of goods and improve the accuracy of identifier identification; in addition, the binding of the container identifier with the goods identifier is realized through cooperation of the management platform and the image acquisition device, which can improve the binding efficiency compared with the manual binding method.

Optionally, in a specific implementation, the first image acquisition device has an image identification function; the apparatus further includes:
a second identification unit, configured to perform identifier identification on the first image to obtain the first container identifier of the first container; and/or, identify the goods identifier of the piece of newly added goods in the first container in the second image based on image content of the second image and image content of the previous image of the second image.

Optionally, in a specific implementation, the first image acquisition device has an image identification function; the apparatus further includes:
a first instruction receiving unit, configured to receive a goods review instruction issued by the management platform when the identifier quantity of the obtained goods identifiers is detected to reach the container goods loading capacity, and acquire a third image about the first container; perform object identification on the third image to obtain the quantity of goods placed in the first container; determine the goods review result based on the quantity of goods placed in the first container and the identifier quantity of goods identifiers sent to the management platform, and send the goods review result to the management platform, so that the management platform receives the goods review result sent by the first image acquisition device.

Optionally, in a specific implementation, the apparatus further includes:
a second instruction receiving unit, configured to receive an image acquisition instruction issued by the management platform when the identifier quantity of the obtained goods identifiers is detected to reach the container goods loading capacity, acquire a third image about the first container, and send the third image to the management platform, so that the management platform receives the third image sent by the first image acquisition device; performs object identification on the third image to obtain the quantity of goods placed in the first container; and determines the goods review result based on the quantity of goods placed in the first container and the identifier quantity of the obtained goods identifiers.

An embodiment of the present application provides an electronic device, as shown in Fig. 10, including:
a memory 1001, configured to store a computer program;
a processor 1002, configured to carry out, when executing the program stored in the memory 1001, the information processing method applied to the first image acquisition device in the information processing system provided or the information processing method applied to the management platform in the information processing system provided by the above embodiments of the present application.

Furthermore, the above electronic device may further include a communication bus and/or communication interface, and the processor 1002, the communication interface and the memory 1001 communicate each other through the communication bus.

The communication bus mentioned in the above electronic device can be a Peripheral Component Interconnect (PCI) bus or an Extended Industry Standard Architecture (EISA) bus, etc. The communication bus can be divided into an address bus, a data bus, a control bus and so on. For ease of presentation, only a thick line is shown in the figure, but this does not mean that there is only one bus or one type of bus.

The communication interface is used for communication between the electronic devices and other devices.

The Memory may include a Random Access Memory (RAM) or a Non-Volatile memory (NVM), such as at least one disk memory. Optionally, the memory may also be at least one storage device located away from the processor.

The above processor may be a general-purpose processor, including a Central Processing Unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gates or transistor logic devices, discrete hardware components.

In yet another embodiment provided by the present application, a computer-readable storage medium is further provided, which stores a computer program therein, wherein the computer program, when executed by a processor, carries out the information processing method applied to the first image acquisition in the information processing system, or, the information processing method applied to the management platform in the information processing system.

In yet another embodiment provided by the present application, a computer program product containing instructions is further provided, which when running on a computer, cause the computer to carry out the information processing method applied to the first image acquisition device in the information processing system in the above embodiment, or, the information processing method applied to the management platform in the information processing system in the above embodiment.

In yet another embodiment provided by the present application, a computer program containing instructions is further provided, which when running on a computer, causes the computer to carry out the information processing method applied to the first image acquisition device in the information processing system in the above embodiment, or, the information processing method applied to the management platform in the information processing system in the above embodiment.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any available medium that can be accessed by a computer or a data storage device such as a server and a data center and the like that includes an integration of one or more available medium. The available medium may be magnetic media (such as a floppy disk, a hard disk, a magnetic tape), optical media (such as DVD) and the like.

It should be noted that in this article, relational terms such as first and second are only to distinguish one entity or operation from another, and do not necessarily require or imply any actual relationship or order between these entities or operations. Moreover, the terms "include", "contain", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various embodiments in this specification are described in a relevant manner, and the same and similar parts between the various embodiments can be referred to each other, and each embodiment focuses on the differences from other embodiments. In particular, for the embodiments of method, apparatus, electronic device, computer-readable storage medium and computer program product, since the embodiments are basically similar to the embodiments of the system, the description is relatively simple, and the relevant points can be referred to the partial description of the embodiment of the method.

The above descriptions are only preferred embodiments of the present application, and are not intended to limit the scope of protection of the present application. Any modifications, equivalent replacements, improvements, etc. made within the spirit and principles of the present application shall be included within the scope of protection of the present application.

## Claims

1. An information processing system, comprising a first image acquisition device and a management platform; wherein, the first image acquisition device is installed at a first preset position, and an acquisition area of the first image acquisition device comprises a preset warehouse-in area;
the first image acquisition device is configured to acquire, when a first container without goods placed therein is detected in the warehouse-in area, a first image about the first container, and send first image information of the first image to the management platform, wherein, the first image information comprises the first image or a first container identifier of the first container in the first image;
the management platform is configured to receive the first image information sent by the first image acquisition device, and obtain the first container identifier of the first container based on the first image information;
the first image acquisition device is further configured to acquire a second image of the first container with goods placed therein, and send second image information of the second image to the management platform, wherein, the second image information comprises the second image or a goods identifier of a piece of newly added goods in the first container in the second image, compared with a previous image of the second image;
the management platform is further configured to receive the second image information sent by the first image acquisition device, obtain the goods identifier of the piece of newly added goods in the first container based on the second image information; and bind the first container identifier with the goods identifier.

2. The system according to claim 1, wherein, the first image acquisition device has an image identification function;
the first image acquisition device is specifically configured to perform identifier identification on the first image to obtain the first container identifier of the first container; and/or, identify the goods identifier of the piece of newly added goods in the first container in the second image based on image content of the second image and image content of the previous image of the second image.

3. The system according to claim 1, wherein,
the first image acquisition device is specifically configured to send the first image to the management platform, and send the second image to the management platform;
the management platform is specifically configured to perform identifier identification on the first image to obtain the first container identifier of the first container in the first image; identify the goods identifier of the piece of newly added goods in the first container in the second image based on image content of the second image and image content of the previous image of the second image.

4. The system according to claim 1, wherein
the management platform is further configured to determine a verification result about the first container identifier when obtaining the first container identifier of the first container; output a palletizing instruction for instructing to place goods in the first container if the verification result represents that verification of the first container identifier is successful.

5. The system according to claim 1, wherein,
the management platform is further configured to output a stop instruction for instructing to stop placing goods in the first container when detecting that an identifier quantity of obtained goods identifiers reaches a preset container goods loading capacity, so that a palletizing robot or a staff stops placing goods in the first container.

6. The system according to claim 5, wherein,
the management platform is further configured to determine a goods review result when detecting that the identifier quantity of the obtained goods identifiers reaches the container goods loading capacity; output first prompt information for prompting to enter goods identifiers when the goods review result represents that a quantity of goods placed in the first container is greater than the container goods loading capacity; receive goods identifiers sent by a target object in response to the first prompt information, and compare the received goods identifiers sent by the target object with the recorded goods identifiers to obtain a to-be-supplementarily-entered goods identifier to be bound; and bind the first container identifier with the to-be-supplementarily-entered goods identifier; wherein the goods identifiers sent by the target object are obtained by the target object scanning goods identifiers of the goods placed in the first container by using a preset scanning device;
and/or,
the management platform is further configured to output a second prompt information for prompting to verify a goods identifier when the goods review result represents that the quantity of goods placed in the first container is less than the container goods loading capacity; receive goods identifiers sent by the target object in response to the second prompt information, and compare the received goods identifiers sent by the target object with the recorded goods identifiers to obtain a redundant goods identifier to be unbound; and unbind the first container identifier from the redundant goods identifier.

7. The system according to claim 6, wherein, the first image acquisition device has an image identification function;
the management platform is specifically configured to send a goods review instruction to the first image acquisition device when detecting that the identifier quantity of the obtained goods identifiers reaches the container goods loading capacity;
the first image acquisition device is further configured to receive the goods review instruction and acquire a third image about the first container; perform object identification on the third image to obtain the quantity of goods placed in the first container; determine the goods review result based on the quantity of goods placed in the first container and the identifier quantity of the goods identifiers sent to the management platform, and send the goods review result to the management platform;
the management platform is specifically configured to receive the goods review result sent by the first image acquisition device.

8. The system according to claim 6, wherein,
the management platform is specifically configured to send an image acquisition instruction to the first image acquisition device when detecting that the identifier quantity of the obtained goods identifiers reaches the container goods loading capacity;
the first image acquisition device is further configured to receive the image acquisition instruction to acquire a third image about the first container, and send the third image to the management platform;
the management platform is specifically configured to receive the third image sent by the first image acquisition device; perform object identification on the third image to obtain the quantity of goods placed in the first container; determine the goods review result based on the quantity of goods placed in the first container and the identifier quantity of the obtained goods identifiers.

9. The system according to claim 6, wherein, the system further comprises a transfer robot;
the management platform is further configured to instruct the transfer robot to transfer the first container to a preset storage area when the goods review result represents that the quantity of goods placed in the first container is the same as the container goods loading capacity;
and/or,
the management platform is further configured to instruct the transfer robot to transfer the first container to a preset storage area after binding the first container identifier with the to-be-supplementarily-entered goods identifier;
and/or,
the management platform is further configured to instruct the transfer robot to transfer the first container to a preset storage area after unbinding the first container identifier from the redundant goods identifier.

10. The system according to claim 6 or 7, wherein,
the management platform is further configured to determine a theoretical moment at which a last piece of goods is loaded based on the container goods loading capacity and a preset goods loading speed; instruct a transfer robot to move to the warehouse-in area when detecting that a current moment is before the theoretical moment and a time interval between the current moment and the theoretical moment is a preset duration; wherein, the preset duration is determined based on a moving speed of the transfer robot.

11. The system according to claim 7, wherein, the system further comprises a second image acquisition device; wherein, the second image acquisition device is installed at a second preset position, an acquisition area of the second image acquisition device comprises a preset warehouse-out area;
the second image acquisition device is configured to acquire, when a second container without goods placed therein is detected in the warehouse-out area, a fourth image about the second container, and send third image information of the fourth image to the management platform, wherein, the third image information comprises the fourth image or a second container identifier of the second container in the fourth image;
the management platform is further configured to receive the third image information sent by the second image acquisition device, and obtain the second container identifier of the second container based on the third image information; and unbind the second container identifier from a goods identifier bound with the second container identifier.

12. The system according to claim 11, wherein, the second image acquisition device has an image identification function;
the second image acquisition device is further configured to perform identifier identification on the fourth image to obtain the second container identifier of the second container.

13. The system according to claim 11, wherein,
the second image acquisition device is specifically configured to send the fourth image to the management platform;
the management platform is further configured to perform identifier identification on the fourth image to obtain the second container identifier of the second container.

14. An information processing method, which is applied to a management platform in an information processing system, wherein the system further comprises a first image acquisition device; wherein, the first image acquisition device is installed at a first preset position, and an acquisition area of the first image acquisition device comprises a preset warehouse-in area; the method comprises:
receiving first image information of a first image sent by the first image acquisition device, and obtaining a first container identifier of a first container based on the first image information; wherein, the first image is obtained by the first image acquisition device acquiring, when the first container without goods placed therein is detected in the warehouse-in area, an image of the first container, and the first image information comprises the first image or the first container identifier of the first container in the first image;
receiving second image information of a second image sent by the first image acquisition device, and obtaining a goods identifier of a piece of newly added goods in the first container based on the second image information, wherein, the second image is obtained by the first image acquisition device acquiring an image of the first container with goods placed therein, and the second image information comprises the second image or the goods identifier of the piece of newly added goods in the first container in the second image compared with a previous image of the second image;
binding the first container identifier with the goods identifier.

15. An information processing method, which is applied to a first image acquisition device in an information processing system, wherein the system further comprises a management platform; wherein, the first image acquisition device is installed at a first preset position, and an acquisition area of the first image acquisition device comprises a preset warehouse-in area; the method comprises:
acquiring, when a first container without goods placed therein is detected in an warehouse-in area, a first image about the first container, and sending first image information of the first image to the management platform, so that the management platform receives the first image information and obtains a first container identifier of the first container based on the first image information, wherein, the first image information comprises the first image or the first container identifier of the first container in the first image;
acquiring a second image of the first container with goods placed therein, and sending second image information of the second image to the management platform, so that the management platform receives the second image information sent by the first image acquisition device, obtains a goods identifier of a piece of newly added goods in the first container based on the second image information, and binds the first container identifier with the goods identifier, wherein, the second image information comprises the second image or the goods identifier of the piece of newly added goods in the first container in the second image compared with a previous image of the second image.

16. An information processing apparatus, which is applied to a management platform in an information processing system, wherein the system further comprises a first image acquisition device; wherein, the first image acquisition device is installed at a first preset position, and an acquisition area of the first image acquisition device comprises a preset warehouse-in area; the apparatus comprises:
a container identifier receiving module, configured to receive first image information of a first image sent by the first image acquisition device, and obtain a first container identifier of a first container based on the first image information, wherein, the first image is obtained by the first image acquisition device acquiring, when the first container without goods placed therein is detected in the warehouse-in area, an image of the first container, and the first image information comprises the first image or the first container identifier of the first container in the first image;
a goods identifier receiving module, configured to receive second image information of a second image sent by the first image acquisition device, and obtain a goods identifier of a piece of newly added goods in the first container based on the second image information, wherein, the second image is obtained by the first image acquisition device acquiring an image of the first container with goods placed therein, and the second image information comprises the second image or the goods identifier of the piece of newly added goods in the first container in the second image compared with a previous image of the second image;
a binding module, configured to bind the first container identifier with the goods identifier.

17. An information processing apparatus, which is applied to a first image acquisition device in an information processing system, wherein the system further comprises a management platform; wherein the first image acquisition device is installed at a first preset position, and an acquisition area of the first image acquisition device comprises a preset warehouse-in area; the apparatus comprises:
a container identifier identifying module, configured to acquire, when the first container without goods placed therein is detected in the warehouse-in area, a first image about a first container, and send first image information of the first image to the management platform, so that the management platform receives the first image information, and obtains a first container identifier of the first container based on the first image information, wherein, the first image information comprises the first image or the first container identifier of the first container in the first image;
a goods identifier identifying module, configured to acquire a second image of the first container with goods placed therein, and send second image information of the second image to the management platform, so that the management platform receives the second image information, obtains a goods identifier of a piece of newly added goods in the first container based on the second image information, and binds the first container identifier with the goods identifier, wherein, the second image information comprises the second image or the goods identifier of the piece of newly added goods in the first container in the second image compared with a previous image of the second image.

18. An electronic device, comprising:
a memory, configured to store a computer program;
a processor, configured to carry out the method according to claim 14 or 15 when executing the program stored on the memory.

19. A computer-readable storage medium having a computer program stored therein, wherein the computer program, when executed by a processor, causes the processor to carry out the method according to claim 14 or 15.

20. A computer program product containing instructions, which when running on a computer, causes the computer to carry out the method according to claim 14 or 15.
